(19) Europäisches Patentamt
European Patent Office
Office européen des brevets

(11) **EP 2 435 957 B1**

(12) **EUROPEAN PATENT SPECIFICATION**

(45) Date of publication and mention of the grant of the patent:
**28.07.2021 Bulletin 2021/30**

(21) Application number: **10783875.7**

(22) Date of filing: **28.05.2010**

(51) Int Cl.:
***G06K 9/80*** *(2006.01)* ***A63F 13/213*** *(2014.01)*
***G06T 7/11*** *(2017.01)* ***H04N 9/75*** *(2006.01)*
*A63F 13/428 (2014.01)* *A63F 13/22 (2014.01)*

(86) International application number:
**PCT/US2010/036699**

(87) International publication number:
**WO 2010/141378 (09.12.2010 Gazette 2010/49)**

(54) **COLOR CALIBRATION FOR OBJECT TRACKING**

FARBKALIBRIERUNG ZUR OBJEKTVERFOLGUNG

ETALONNAGE DE COULEUR POUR UN SUIVI D'OBJET

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.05.2009 US 217393 P**
**27.05.2010 US 789389**

(43) Date of publication of application:
**04.04.2012 Bulletin 2012/14**

(73) Proprietor: **Sony Interactive Entertainment Inc.**
**Tokyo 108-8270 (JP)**

(72) Inventors:
- **MIKHAILOV, Anton**
**Foster City**
**CA 94404-2175 (US)**
- **MARKS, Richard, Lee**
**Foster City**
**CA 94404-2175 (US)**

(74) Representative: **D Young & Co LLP**
**120 Holborn**
**London EC1N 2DY (GB)**

(56) References cited:
**US-A1- 2001 008 561** **US-A1- 2002 037 770**
**US-A1- 2005 129 273** **US-A1- 2006 160 616**
**US-A1- 2006 238 347** **US-A1- 2007 117 625**
**US-A1- 2007 127 775** **US-A1- 2007 127 775**
**US-B2- 7 395 966**

- **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates generally to calibrating a tracking system, and more particularly to calibrating object colors observed by the tracking system.

DESCRIPTION OF THE RELATED ART

A growing trend in the computer gaming industry is to develop games that increase the interaction between a user and a gaming system. One way of accomplishing a richer interactive experience is to use game controllers whose movement is tracked by the gaming system in order to track the player's movements and use these movements as inputs for the game. Generally speaking, gesture input refers to having an electronic device such as a computing system, video game console, smart appliance, etc., react to some gesture captured by a video camera or other optical sensor that tracks an object.

In order to produce reliable measurements of the location and motion of the user, the gaming system needs to be calibrated. Such calibration is commonly necessary each time the gaming system is used. In conventional systems, controllers do not change colors, nor are the controller's positions tracked based on a color of the controller. Nor does calibration in conventional gaming systems include calibrating colors of the controller. Previously proposed arrangements are disclosed in US 2006/0160616, US 2005/0129273, US 2007/0117625, US 2007/0127775.

BRIEF DESCRIPTION OF THE DRAWINGS

The invention may best be understood by reference to the following description taken in conjunction with the accompanying drawings in which:

**Figure** 1 illustrates a perspective view of a tracking system, in accordance with one embodiment of the present invention;

**Figure 2A** illustrates a game controller having a ball section, in accordance with one embodiment of the present invention;

**Figure 2B** illustrates another game controller having a ball section, in accordance with another embodiment of the present invention;

**Figure** 3 illustrates multiple motion capture balls disposed on a user, in accordance with one embodiment of the present invention;

**Figure** 4 illustrates a block diagram of a tracking system, in accordance with one embodiment of the present invention;

**Figure** 5 shows a schematic diagram of a multiplayer environment, according to one embodiment of the present invention;

**Figure 6A** illustrates a flow diagram of one embodiment for a method of calibrating a tracking system;

**Figure 6B** illustrates a flow diagram of another embodiment for a method of calibrating a tracking system;

**Figure 7A** illustrates a flow diagram of still another embodiment for a method of calibrating a tracking system;

**Figure 7B** illustrates a flow diagram of still yet another embodiment for a method of calibrating a tracking system;

**Figure 8A** illustrates a flow diagram of one embodiment for a method of partially recalibrating the tracking system;

**Figure 8B** illustrates a flow diagram of one embodiment for a method of recalibrating a tracking system upon changing an exposure setting of an optical sensor;

**Figure 8C** illustrates a flow diagram of one embodiment for a method of mapping object color variance and/or optical sensor vignetting;

**Figures 9A-9E** illustrate calibration results that are achieved after performing calibration and/or color resets;

**Figure 10** illustrates hardware and user interfaces that may be used to determine controller location, in accordance with one embodiment of the present invention; and

**Figure 11** illustrates additional hardware that may be used to process instructions, in accordance with one embodiment of the present invention.

DETAILED DESCRIPTION

The present invention, as is defined in the appended claims, relates to a method, apparatus and computer readable storage medium for calibrating a tracking system in terms of trackable colors, the tracking for use in a gaming system or other computing device. Several aspects of the invention are exemplified with regard to the following embodiments. In one embodiment, to calibrate a tracking system a computing device locates an object in one or more images taken by an optical sensor. The computing device determines environment colors included in the images. The environment colors are colors in the one or more images that are not emitted by the object. The computing device then determines one or more trackable colors that, if assumed by the object, will enable the computing device to track the object.

In one embodiment, locating the object includes causing the object to assume a plurality of predefined colors, in sequence. The one or more images may include a separate image for each of the plurality of predefined colors. A group of pixels that have different colors in the different images may then be identified as the object. In one embodiment, to determine the environment color, the processing device causes the object to emit no light, and one of the images is taken while the object emits no light. Colors of the object in the image taken while the object emitted no light may then be subtracted from colors of the object from the images taken while the object emitted light to identify a true color output by the object. The computing device may then use the true color output information and the environment color information to determine which colors are trackable colors. This may be performed without actually causing the object to assume the tested colors to determine which are trackable colors.

In the following description, numerous details are set forth. It will be apparent, however, to one skilled in the art, that the present invention may be practiced without these specific details. In some instances, well-known structures and devices are shown in block diagram form, rather than in detail, in order to avoid obscuring the present invention.

Some portions of the detailed description which follows are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "locating", "determining", "tracking", "identifying", "excluding" or the like, refer to the actions and processes of a computer system, or similar electronic computing device, that manipulates and transforms data represented as physical (e.g., electronic) quantities within the computer system’s registers and memories into other data similarly represented as physical quantities within the computer system memories or registers or other such information storage devices.

The present invention also relates to an apparatus for performing the operations herein. This apparatus may be specially constructed for the required purposes, or it may comprise a general purpose computer selectively activated or reconfigured by a computer program stored in the computer. In one embodiment, the apparatus for performing the operations herein includes a game console (e.g., a Sony Playstation®, a Nintendo Wii®, a Microsoft Xbox®, etc.). A computer program may be stored in a computer readable storage medium, such as, but not limited to, any type of disk including floppy disks, optical disks (e.g., compact disc read only memory (CD-ROMs), digital video discs (DVDs), Blu-Ray Discs™, etc.), and magnetic-optical disks, read-only memories (ROMs), random access memories (RAMs), EPROMs, EEPROMs, magnetic or optical cards, or any type of media suitable for storing electronic instructions.

**Figure 1** illustrates a perspective view of a tracking system 100, in accordance with one embodiment of the present invention. The tracking system 100 includes an optical sensor 105, an object 110 that is tracked by the optical sensor 105, and a computing device 115 that processes data received by the optical sensor 105 and by the object 110. In one embodiment, the tracking system 100 is a component of a gaming system. Alternatively, the tracking system 100 may be a component of a motion capture system or other computing system.

The optical sensor 105 is a sensor that measures positions of the object 110 in two-dimensional or three-dimensional space relative to the optical sensor 105. Positional data (e.g., images) taken by the optical sensor 105 are in a reference frame 150 of the optical sensor 105 that can be defined by an image plane and a vector normal to the image plane. A reference frame is defined herein as a coordinate system within which to measure an object's position, orientation and other properties. The terms reference frame and coordinate system are used interchangeably throughout this application.

As shown, the optical sensor 105 is positioned on top of a television set 120, with a negative pitch 145 relative to a floor 150. The pitch 145 is an angle between a horizontal axis of the optical sensor's reference frame 150 that is in the image plane of the optical sensor 105 and a plane perpendicular to gravity 135.

In one embodiment, the optical sensor 105 is a standard video camera. In such an embodiment, the optical sensor 105 may capture depth information (distance 130 between the optical sensor 105 and the object 110) based on predefined information that identifies a size of the object 110 and/or based on predefined information that identifies a field of view (FOV) 125 of the optical sensor 105. The field of view 125 is the angular extent of a given scene imaged by the optical sensor 105. The field of view defines the distortion (e.g., amount of zoom) of an image caused by a camera lens. As the object 110 is moved further from the optical sensor 105 (that is, as the distance 130 is increased), an image of the object 110 as captured by the optical sensor 105 becomes smaller. Therefore, the distance 130 of the object 110 to the optical sensor 105 can be determined based on a ratio of the image size of the tracked object 110 (e.g., as measured in pixels) to a known actual size of the tracked object 110 provided that a field of view 125 of the optical sensor 105 is known.

In another embodiment, the optical sensor 105 is a Z-camera (a single lens video camera capable of capturing video with depth information) or a stereo camera (video camera with 2 or more lenses that can capture three-dimensional images). In such an embodiment, the optical sensor 105 can capture depth information without being pre-configured with information identifying a size of the object 110.

The object 110 is an electronic device that includes a multi-color light emitter, such as a red-green-blue light emitting diode (RGB LED). The multi-color light emitter can be made to emit light of varying hue and brightness. In one embodiment, the object 110 is a hand held electronic device or a portion of a handheld electronic device such as a game controller, as shown in **Figures 2A and 2B.** In another embodiment, the object 110 is a motion capture (mocap) ball, as shown in **Figure 2C**. The object 110 may have an arbitrary shape, such as a square, sphere, triangle, or more complicated shape. In one embodiment, the object 110 has a spherical shape.

**Figure 2A** illustrates a game controller 200 having a ball section 205, in accordance with one embodiment of the present invention. **Figure 2B** illustrates another game controller 210 having a ball section 215, in accordance with another embodiment of the present invention. In certain embodiments, the ball sections 205 and 215 correspond to object 110 of **Figure 1.**

The ball sections 205, 215 in one embodiment can light up to assume many different colors. In one embodiment, a multi-color light emitter such as an RGB LED is disposed inside the ball sections 205, 215. Although a spherical ball section is illustrated, the ball sections 205, 215 can have other shapes for visual tracking purposes, such as a partial sphere, an imperfect sphere, an elongated ball (like one used in American football or in rugby), a cube-like shape, etc. In one embodiment, the ball section 205, 215 is 4 cm. in diameter. However, other larger or smaller sizes are also possible. Larger sizes help with visual recognition. For example, a ball with a 5 cm. diameter can provide about 55 percent more pixels for image recognition than a 4 cm. ball.

**Figure 3** illustrates multiple mocap balls 320 disposed on a user 325, in accordance with one embodiment of the present invention. Mocap balls 320 are markers that are worn by a user 325 near each joint to enable an optical sensor to capture and identify the user's motion based on the positions or angles between the mocap balls 320. In one embodiment, the mocap balls 320 are attached to a motion capture suit. In one embodiment, each mocap ball 320 includes a multi-color light emitter. In response to a received command, each mocap ball 320 can assume an assigned color. In one embodiment, all of the mocap balls are assigned the same color (e.g., a particular shade of green). Alternatively, different mocap balls may be assigned different colors, which may be different shades of the same color, different primary colors, etc.

Returning to **Figure 1,** object 110 and/or optical sensor 105 are connected with computing device 115 through wired and/or wireless connections. Examples of wired connections include connections made via an IEEE 1394 (firewire) cable, an ethernet cable, and a universal serial bus (USB) cable, etc. Examples of wireless connections include wireless fidelity (WiFi™) connections, Bluetooth® connections, Zigbee® connections, and so on. In the illustrated embodiment, optical sensor 105 is connected with computing device 115 via a wired connection.

Computing device 115 may be a video game console, a personal computer, a game kiosk, or other computing apparatus. Computing device 115 may execute games or other applications that can respond to user input from object 110. The object 110 is tracked, and motion of the object 110 provides the user input.

Environment conditions such as room lighting, the presence of background objects of various colors, user clothing, time of day, etc. affect trackable colors. Additionally, color properties such as brightness and hue may vary between objects. Moreover, colors of a single object may vary across the surface of the object. Accordingly, before the tracking system 100 can accurately track the object 110 using object color, the tracking system 100 needs to be calibrated. Calibrating the tracking system 100 includes determining which colors are trackable colors. A trackable color is a color that, if assumed by the object 110, would enable the object to be tracked. In one embodiment, a color is a trackable color if that color is not included (or less than a threshold amount of that color is included) in the field of view 125 of the optical sensor 105. Calibrating the tracking system 100 may also include determining which colors to look for when the ball is emitting certain colors. For example, if the object 110 is emitting a red light, the computing device 115 may look for colors ranging from orange to deep red. Color calibration may also include determining environment lighting conditions (e.g., environment colors) and compensating for them. Color calibration is discussed in greater detail below with reference to **Figures 6A- 9E.**

**Figure 4** illustrates a block diagram of a tracking system 400, in accordance with one embodiment of the present invention. The tracking system 400 includes a computing device 415 physically connected with an optical sensor 405. In one embodiment, the computing device 415 is also wirelessly connected with an object 410 that is tracked by the optical sensor 405. It should be noted that the computing device 415 may be wirelessly connected with the optical sensor 405 and/or physically connected with the object 410. In one embodiment, the tracking system 400 corresponds to tracking system 100 of **Figure 1.**

The object 410 includes a multi-color light emitter 420. In one embodiment, the multi-color light emitter 420 is an RGB LED. Alternatively, the multi-color light emitter 420 may include a separate red LED, green LED and blue LED. The multi-color light emitter 420 may also include other types of colored light sources, which preferably can emit a full range of colors.

The optical sensor 405 may be a video camera, a Z-camera, a stereo camera, or other device capable of capturing an image. As the object 410 is moved, the optical sensor 405 captures images that include object 410. The optical sensor 405 communicates the images to computing device 415. In one embodiment, the optical sensor 405 streams the image data to computing device 415 in real time as the image data is obtained.

The computing device 415 may be a video game console, personal computer, game kiosk, etc. Computing device 415 includes an object tracker 440 that tracks the object 410 by looking for particular colors included in captured images. The object tracker 440 may further perform an edge analysis using the particular colors, and determine a shape of the object 410 from the edge analysis. The object tracker 440 may have increased accuracy and precision when using edge analysis as well as color tracking.

In one embodiment, as images are taken by the optical sensor 405, and the object 410 is tracked by the object tracker 440, changing positions of the object 410 are used as an input to the computing device 415 to control a game, computer application, etc. For example, changing positions of the object 410 can be used to control a character in a first person or third person perspective game, to move a mouse cursor on a screen, and so on. In another embodiment, inertial data received from the object 410 is used as an input to the computing device 415. Alternatively, the inertial data may be used in combination with the positional data obtained by the optical sensor 405 to provide a precise and accurate input for the computing device 415.

In one embodiment, the computing device 415 includes a calibrating logic 432 that calibrates the tracking system 400 based on color data of the object 410 and of the rest of received images (e.g., environment colors caused by background objects, environment lighting, etc.). The calibrating logic 432 may be one or more hardware logic circuits. Alternatively, the calibrating logic may a logic executed by a processing device (e.g., a cell processor, central processing device, or other processing device). The calibrating logic 432 may also include a combination of hardware logic circuits and software logic executed by a processing device.

In one embodiment, the calibrating logic 432 includes an object locator 436 that makes an initial determination of where the object 410 is during calibration. Calibrating logic 432 may cause the optical sensor to take multiple images while the object is cycled through a sequence of colors (e.g., the primary colors). Object locator 436 may determine which pixels in the images vary between the images (e.g., which are green when the object 410 is green, which are blue when the object 410 is blue, and which are red when the object 410 is red). The object locator 436 may then identify these pixels as representing the object.

Once the object 410 has been located in an image by the object locator 436, color assessor 438 determines environment colors included in the image (colors that are not caused by the object 410 such as background colors). The color assessor 438 also determines what colors would be easily tracked if assumed by the object 410 (e.g., if emitted by the multi-color light emitter 420), and what colors would be difficult or impossible to accurately track. The color assessor 438 may determine a set of trackable colors by separating out detect object color that is emitted by the object (object emitted color) from detected object color that is caused by room lighting (environment color contribution). The color assessor 438 may then compute a set of thresholds for multiple different color possibilities, and determine whether the background image includes colors falling within the color thresholds.

Once color assessor 438 determines a set of trackable colors, it may add the trackable colors to a trackable colors data structure 442, which may be stored in memory. In one embodiment, color assessor 438 determines the set of trackable colors for a specific exposure setting of the optical sensor 405. The color assessor 438 may determine hue settings as well as intensity settings for trackable colors at the specific exposure setting. In one embodiment, if the exposure setting of the optical sensor is changed, color assessor 438 recomputes the trackable colors and updates the trackable colors data structure 442. Color calibration is discussed in greater detail below with reference to **Figures 6A- 9E.**

**Figure 5** shows a schematic diagram of a multiplayer environment 500, in which visual information is used to determine the locations of different controllers held by players, according to one embodiment. In the multiplayer environment 500, optical sensor 508 obtains an image of a playing field 518, and the image is analyzed to obtain the location of ball-attached controllers $C_1$, $C_2$, $C_4$ and $C_5$ (e.g., based on background colors and colors of the ball-attached controllers). Distances $d_{z1}$, $d_{z2}$, $d_{z4}$, and $d_{z5}$ can be estimated by analyzing the shape and size of the respective balls in the captured image.

Before game play, calibration is performed for each ball-attached controller $C_1$, $C_2$, $C_4$ and $C_5$. Even though the room lighting and color conditions may be approximately the same for all of the controllers, in one embodiment calibration should still be performed separately for each controller (though calibration of each controller may take place concurrently). Such individual calibration can adjust for variation, for example, in the multi-color light emitters (e.g., RGB LEDs) included in each controller and differences in room lighting at each controller location. For example, controller $C_1$ and controller $C_2$, when told to emit a blue light, may emit slightly different hues and/or intensities of blue. Separate calibration can account for such variance.

In one embodiment, in which a profile of each controller to be used is already saved by the computing device 502, a separate calibration of each controller is not necessary. In such an embodiment, a single calibration can be performed using just a single controller, and the calibration results can be modified based on the differences between the profiles of the controller for which calibration was performed and the profile of the other controllers. For example, if the computing device 502 knows that controller $C_5$ generates a lighter shade of green than $C_4$, then color calibration can be performed by $C_4$, and the color calibration can be modified to apply to controller $C_5$.

Once the controllers have been calibrated, the computing device 502 can cause the controllers (or portions of the controllers) to assume allowable (trackable) colors based on things that are happening in a game that is running on the computing device 502. For example, if player B attempts to cast a water spell in the game, controller $C_4$ may assume a blue color. The computing device 502 tracks the controllers by looking for a certain color or sets of colors that are dependent on colors the controllers were directed to assume. Note the different controllers may assume different colors during game play. The computing device uses obtained coordinates and distances to produce representations of the players in screen 504, avatars 512a and 512b respectively. A typical distance for good image recognition is about 10 ft (3 m). One advantage of using visual recognition is that improvements in image capture and image recognition can be included in the system without having to change the controller.

**Figure 6A** illustrates a flow diagram of one embodiment for a method 600 of calibrating a tracking system. The method may be performed by processing logic that may comprise hardware (e.g., circuitry, dedicated logic, programmable logic, microcode, etc.), software (such as instructions run on a processing device), or a combination thereof. In one embodiment, method 600 is performed by computing device 115 of **Figure 1.**

Referring to **Figure 6A,** at block 602, a computing device initiates color calibration of an object that can assume multiple colors. In one embodiment, color calibration is initiated each time a game or other application is started on computing device 115. Alternatively, color calibration may be initiated each time movement of a tracked object is detected after a period of inactivity. Alternatively, color calibration may be initiated upon receiving a calibration signal. The calibration signal may be generated by a tracked object when a user presses a specific button or sequence of buttons included in the tracked object. Color calibration may also be performed continuously.

In one embodiment, the computing device sends a command to the object that causes the object to assume (emit) a predetermined color upon initiating the color calibration. In another embodiment, the computing device sends commands to the object that cause the object to assume a sequence of colors (e.g., the primary colors). In another embodiment, the user is asked to hold the object at a specified position during the color calibration. For example, a circle may be displayed at a specific location in a screen. The user may be asked to move the object until an image of the object in the screen lines up with the circle.

At block 605, an optical sensor takes one or more images. If multiple images are taken, each of the images may be taken while the object is emitting a different color. For example, the object may be made to emit the primary colors of red, green and blue, in series. Separate images may be taken while the object emits red, green and blue. Since any color is a linear combination of red, green and blue, once these colors are characterized, calibration information for all colors may be determined. One or more images may also be taken while the object is not emitting light of any color. In one embodiment, the images are taken at a minimum or low exposure setting of the optical sensor. A lower exposure setting reduces color saturation and motion blurring. The optical sensor sends the images to the computing device. In one embodiment, the computing device receives the images in a two-dimensional reference frame of the optical sensor.

At block 610, the computing device locates the object in the image (or images). In one embodiment, the computing device searches for a predetermined color that the object assumed in the images. Pixels in the images that correspond to the predetermined color (or slight variations of the predetermined color) are determined to be the object.

For example, magenta is a relatively rare color that does not usually appear in images. The object may be made to turn magenta, and the computing device may look for magenta pixels in the image taken by the optical sensor. In another embodiment, the computing device assumes that the object is in the specified position.

At block 615, the computing device determines environment colors of the image. In one embodiment, environment colors include all colors that are included in pixels of the image that do not correspond to the object. In one embodiment, the computing device generates a color histogram of the image, and subtracts the pixels of the image that correspond to the object from the histogram. The remaining colors represent all environment colors that are included in the background of the image. In one embodiment, determining the environment colors includes identifying the colors of the pixels representing the object (which were identified at block 610) when the object was not emitting any light. These colors are determined to be environment colors that are reflected by the object.

At block 630, the computing device determines what colors are usable for the object (which colors are trackable colors). Trackable colors are those colors that, if assumed by the object, will be easy to differentiate from the environment colors (e.g., colors caused by background objects and environment lighting). The computing device can detect small variations in hue and intensity. Therefore, it may be able to easily differentiate between different shades of the same color (e.g., between a light blue and a dark blue). The computing device can also easily differentiate between different colors (e.g., different primary colors). Usable colors enable the object to be accurately tracked by the optical sensor and computing device. In one embodiment, determining the usable colors includes cycling through a sequence of colors, and verifying how easy it is to differentiate the object from the background using those colors. This may be performed computationally based on previously obtained images. Thus, the object may not need to assume any of the tested colors to determine whether those colors are trackable colors. Once the usable colors are determined, the method ends.

**Figure 6B** illustrates a flow diagram of another embodiment for a method 686 of calibrating a tracking system. The method may be performed by processing logic that may comprise hardware (e.g., circuitry, dedicated logic, programmable logic, microcode, etc.), software (such as instructions run on a processing device), or a combination thereof. In one embodiment, method 686 is performed by computing device 115 of **Figure 1.**

Referring to **Figure 6B,** at block 687, a computing device initiates color calibration of an object that can assume multiple colors. At block 688, the computing device instructs the object to assume (emit) a specified color or to emit no color. In one embodiment, the computing device directs the object to emit a primary color. The object may be instructed to emit the specified color at a specified brightness level. At block 689, an optical sensor captures a digital image of a scene that includes the object. The optical sensor may take the digital image at a predetermined exposure setting.

The optical sensor has a frame rate, and captures a separate image each frame. In one embodiment, the optical sensor has a frame rate of 60 frames per second, in which case each frame includes everything observed by the optical sensor for one sixtieth of a second. If the object changes color mid-frame, then the frame would include two colors of the object, and would be inaccurate. In one embodiment, the computing device has a clock that is out of synchronization with a clock of the optical sensor. Accordingly, in one embodiment, the object is caused to assume the specified color for at least three frames (e.g., three images taken) to ensure that an image is taken in which the object had the specified color (or no color) for an entire frame. Therefore, there will be at least one frame in which the color of the object remained constant.

In another embodiment, the clock of the optical sensor may be time synchronous with the clock of the computing device. Therefore, the timing between the frame rates of the optical sensor and when the object is made to assume particular colors is managed by the computing device. Thus, the computing device may time the colors of the object so that they are aligned with frames of the optical sensor, and it can be guaranteed that the object will not change colors until a frame has completed. In this embodiment, the object may be made to assume each sampled color for as little as one frame (e.g., a single image). If the optical sensor's clock is time synchronized with the computing device's clock, then all of the images may be taken faster than the human eye can see. Additionally, the color calibration may be performed even if the object is moving, provided that it is not moving quickly.

When the object is made to assume the specified color, different portions of the object may interact with the background environment (e.g., environment lighting) in different ways. Therefore, different portions of the object may appear to have different colors. In other words, the object is usually observed as a set of colors rather than a single color. Moreover, as different colors are sampled, the distribution of colors across the object differs. For example, when the object flashes red, the object may range from orange to bright red. When the object flashes blue, the object may be a narrow range of colors from medium to dark blue.

At block 690, the computing device determines whether more images need to be taken. In one embodiment, the computing device causes the object to emit multiple colors, in sequence. Blocks 688 and 689 may be repeated for each color that the object is made to assume. In one embodiment, the object is made to assume each primary color (red, green and blue). In one embodiment, the object is also made to emit no color, and one or more images are taken of the object while it emits no color (e.g., while its multi-colored light emitter is turned off).

At block 691, the computing device uses the images that were taken while the object was made to emit different colors to locate the object in the images. For each image, pixels in the image that correspond to the color that the object was made to assume while the image was taken may be identified. For the image that was taken while the object was made to emit red, red pixels may be identified; for the image that was taken while the object was made to emit green, green pixels may be identified; and for the image that was taken while the object was made to emit blue, blue pixels may be identified. Those pixels that were red in the red image, green in the green image and blue in the blue image may be identified as the pixels that represent the object, thus locating the image.

In one embodiment, the object should be approximately still while the images are taken. Approximately still may be defined as motion that causes differences in position in the images that are less than a threshold number of pixels. Accordingly, at block 692, the computing device determines whether the object was moving while the images were taken. In one embodiment, the object includes one or more inertial sensors such as an accelerometer, magnetometer and/or gyroscope. If the inertial sensors report movement during imaging, the computing device may determine that the object was moving. Additionally, a shape of the object may be known by the computing device. If the object was moving during imaging, then the shape of the object may appear squeezed compared to how the object is expected to appear in the images. For example, if the object is a ball, then there should be a 1 to 1 aspect ratio for the object in the images. If the object does not have a 1 to 1 aspect ratio (appears squeezed), the computing device may determine that the object was moving during imaging. If the object was moving during imaging, the method returns to block 688. If the object was approximately still during imaging, the method continues to block 693.

All color that is not caused by light emitted by the object is considered environment color. In one embodiment, the object has no color of its own while it is not emitting light. Therefore, the image that was taken while the object was not emitting any light is used to determine environment color. The object may appear to have color based on the lighting environment that it is in. The color that is added by the lighting environment can be determined by analyzing the image that was taken when the object was not emitting any colors (e.g., with the object turned off). Since the location of the object is known, the computing device can determine the color of the object in the image that is caused by lighting conditions of the environment, rather than by the object.

In one embodiment, based on the lighting environment, some parts of the object may have color that is highly affected by room lighting, while other parts of the object may be less affected. In one embodiment, the computing device identifies those portions of the object that are unreliable (e.g., highly affected), and does not attempt to use pixels from those portions for tracking or calibrating. For example, based on the unlit object (object when not emitting any colored light), the computing device may determine that a top half of the object is saturated white. Therefore, for all colors, that top half of the object will not be considered for tracking or calibrating.

At block 693, the computing device determines the environment color contribution to the object's color. While the object is not emitting any light, any color of the pixels corresponding to the object is caused by environment color (e.g., by environment lighting). This same environment color is included in the object in all other images. Therefore, the computing device can subtract the environment color from colors of the object that are observed in the other images in which the object is emitting light to determine actual colors that are being emitted by the object.

At block 694, the computing device subtracts the environment color contribution from the object colors included in each of the images taken while the object was emitting the different colors. The remaining value represents the actual colors emitted by the object.

The colors emitted by the object are not the same as colors observed by the optical sensor. For example, when the object emits maximum red, and no green or blue, the optical sensor may measure 0.7 red, 0.2 blue and 0.1 green. For each of the colors that the object was made to assume (e.g., each of the primary colors), the environment color is subtracted from the color values observed by the optical sensor. The resulting color values are recorded as the emitted color of the object for a particular primary color setting. Thus, the actual colors due to the colored light emitted by the object are determined. The environment color and the object color can therefore be separated.

In one embodiment, each of the object emitted color values is an average of all pixels that represent the object in the image. Alternatively, the object emitted color values may be computed using a median of the pixels that represent the object. In one embodiment, edge detection is used to identify the edge of the object, and the pixels located at the edge of the object are not used in determining the object emitted color (e.g., in computing the average or the median of the pixels representing the object).

In one embodiment, by separating the environment color from the object color, object color values are rendered exposure and gain agnostic. Thus, an exposure setting of the optical sensor can be changed at any time without introducing a need to completely redo the color calibration. Additionally, by separately determining the object colors and the environment colors, the computing device can use this information to predict what the object will look like (what colors object will have) at different hue and brightness settings for the object and at different exposure and gain settings for the optical sensor. Exposure and gain are linear, therefore, doubling exposure will double the color contribution of both the environment color and the object emitted color.

At block 695, the computing device determines trackable colors. In one embodiment, the computing device sets color value thresholds for multiple different colors. The color value thresholds represent a set of colors that will be associated with the object for a particular color setting of the object. For each of the color value thresholds, the computing device determines a number of pixels in the background (environment colors) that will fall within the color value threshold. If there are more than a maximum amount of pixels that fall within the color value thresholds at a particular color setting, then that color setting cannot be used for tracking (is not a trackable color). In one embodiment, if more than 20 pixels are found in the image that are within the color value thresholds, then the color setting associated with those color thresholds is not a trackable color. Colors that are not in conflict with the scene (colors not included in the environment colors, or that have few pixels in the environment colors) are determined to be trackable colors. This may be a purely static computation.

In one embodiment, the image that was taken while the object was emitting no color is used to compare against color thresholds associated with potential colors. Alternatively, one of the images taken while the object was emitting color may be used, provided that the pixels corresponding to the object are masked off. The result may be an array identifying how many pixels with each color (within threshold values for that color) are in the image. This information may be output as a hue bar that includes gaps for non-trackable colors.

In one embodiment, color value thresholds are checked for 360 different color settings. Each of the color settings may be checked at a particular gain setting and exposure setting of the optical sensor. The color thresholds used depend on the color space used. For example, if a YUV color space is used, then UV thresholds are set (represented as a rectangle of color settings). On the other hand, if RGB color space is used, then RGB thresholds are set (represented as a cone, circle or sphere of color values).

The optical sensor has a saturation point for each primary color (e.g., a red saturation, blue saturation and green saturation). It is best to keep the object very bright relative to rest of scene. Therefore, the colors that are searched to identify trackable colors are set such that the environment color plus the object emitted color for one or two of the three primary colors is near the saturation point. All colors are a combination of at most two primary colors. Therefore, all searched colors include at most some combination of intensity values of two of the three primary colors. In one embodiment, the saturation point is 255 counts, and the intensity for one or two primary colors is set such that the object emitted color plus the environment color equals 235 counts.

Object color can be described by the following equation:

$$(\text{Object Color})*(\text{exposure}) + (\text{environment color})*(\text{exposure}) = \text{total color}$$

Accordingly, by separating out the object emitted color and the environment color, the total color can be controlled as exposure is adjusted by adjusting the object emitted color.

In one embodiment, the color thresholds allow for 30% color variation. Therefore, any colors that vary by less than 30% of a target color are included in a particular trackable color. In another embodiment, a smaller color variation or larger color variation is allowed in each of the color thresholds. An advantage of cutting down the variation permitted for a single color setting is that more colors may be used.

In one embodiment, the image is blurred before determining the set of trackable colors. Blurring may be performed by replacing a color value for a pixel by some combination (e.g., average) of the surrounding pixels. This may prevent problems that may be caused by stuck pixels of the optical sensor (e.g., a pixel that always detects green). This may also prevent moiré patterns (which may otherwise occur if background objects have high contrasting edges).

Consider the following example. Assume that the image background includes a yellow wall, green plants and a red sofa. In this case, much of the image (e.g., many pixels) may include certain shades of yellow, green and red. When the object is made to assume particular shades of red, for example, then much of the object may be observed to have the same or similar color to the sofa. Therefore, it may be difficult to distinguish between the object and the sofa in the image. To prevent a situation in which the object cannot be tracked accurately, the object should not be made to assume a color such that it is observed to have those shades of red that are included in the background due to the sofa. Similarly, the object should not be made to assume certain shades of green or yellow due to the wall and the plants.

At block 696, the computing device determines if there are enough colors available. In one embodiment, there are enough colors available if there are at least as many trackable colors as there are objects. Therefore, each object may assume a different color, and may be tracked separately. Alternatively, there may be a trackable color threshold (e.g., 15 colors), and there may not be enough trackable colors if the number of trackable colors is below the threshold. In one embodiment, if there are not enough trackable colors, the method continues to block 697. In another embodiment, if there are not enough trackable colors, the method continues to block 699. If there are enough trackable colors, the method proceeds to block 698.

At block 697, the computing device instructs a user to change the environment. In one embodiment, the computing device can determine an amount of ambient light measured by the optical sensor. If the ambient light is too high, then colors may saturate, making tracking difficult and reducing an amount of trackable colors. Accordingly, if the ambient light is high, the computing device may instruct a user to turn off lights and/or close blinds/curtains.

In one embodiment, there may not be enough colors available if the background includes too many different colors. Common background objects that have many different colors are emissive objects such as televisions, lava lamps, neon signs, Christmas tree lights, etc. If there are not enough available colors, a user may be instructed to turn off any background televisions, lava lamps, etc. The background may also simply include many different colored objects, causing the availability of trackable colors to be limited. In one embodiment, an image is displayed to a user that highlights background objects that are preventing particular colors from being used. These background objects may be made to pulsate, may be shown in color while the rest of the image is shown using grayscale, may be shown with arrows pointing at them, etc. A user may be notified that additional colors will be made available if any of the identified objects are moved out of the background. Once the user changes the background (e.g., by moving objects, turning off emissive objects, closing blinds, etc.), the method returns to block 688.

At block 699, the computing device relaxes one or more requirements that are used to determine which colors are trackable colors. In one embodiment, relaxing the requirements includes increasing the maximum amount of pixels in the background image that are allowed to fall within the color thresholds. For example, the maximum pixel count allowed for a trackable color may be increased to 40 pixels, 60 pixels, etc. This may reduce tracking quality, but increase the number of available trackable colors.

At block 698, the computing device assigns a particular trackable color to the object and begins tracking. The color assigned to the object may be based on an active game or other application. In one embodiment, the computing device notifies the game or application of available trackable colors, and the game/application may dynamically choose any of the trackable colors. Alternatively, a color that will provide the best tracking may be identified, and the object may be made to assume this color. In one embodiment, the color that will provide the best tracking is the color that is most different from any environment colors. In one embodiment, the computing device changes color of the object dynamically to ensure that the object has a color that is easiest to track. In one embodiment, the computing device will automatically change the object between colors that are within a particular color region. For example, if the object is a red color, then the object will automatically be switched between trackable reds to maintain a best tracking color. Additionally, if at any point a location of the object is lost, the object may be made to emit a new one of the trackable colors.

In one embodiment, in which the optical sensor's clock is not time synchronous with the computing device's clock, calibration takes approximately a quarter second. In another embodiment, calibration takes less than a quarter second (e.g., a $16^{th}$ of a second). Such quick calibration may be performed, for example, when time synchronous clocks are used.

**Figure 7A** illustrates a flow diagram of yet another embodiment for a method 750 of calibrating a tracking system. The method may be performed by processing logic that may comprise hardware (e.g., circuitry, dedicated logic, programmable logic, microcode, etc.), software (such as instructions run on a processing device), or a combination thereof. In one embodiment, method 750 is performed by computing device 115 of **Figure 1.**

Referring to **Figure 7A,** at block 755, a computing device initiates color calibration of an object that can assume multiple colors. At block 760, an optical sensor takes a first image. The first image is taken while a multi-color light emitter of the object is disabled. The optical sensor sends the image to a computing device.

At block 765, the computing device determines background colors of the image. In one embodiment, the object does not have any color when it is not emitting any colored light. Accordingly, all colors in the image are from the background.

At block 770, the computing device causes the object to assume a color that is not in the background. For example, if the background is blue, then the object may be made to emit a red light. At block 775, the optical sensor takes a second image, and sends the second image to the computing device. At block 780, the computing device locates the object in the image by identifying the pixels in the image that correspond to the color (or slight variations of the color) that the object is emitting.

At block 785, the computing device determines what colors are usable for the object. In one embodiment, determining the usable colors includes cycling the object through a sequence of colors, and verifying how easy it is to differentiate the object from the background using those colors.

Once the usable colors are determined, the method ends.

**Figure 7B** illustrates a flow diagram of still another embodiment for a method 786 of calibrating a tracking system. The method may be performed by processing logic that may comprise hardware (e.g., circuitry, dedicated logic, programmable logic, microcode, etc.), software (such as instructions run on a processing device), or a combination thereof. In one embodiment, method 786 is performed by computing device 115 of **Figure 1.**

Referring to **Figure 7B,** at block 787, a computing device initiates color calibration of an object that can assume multiple colors. In one embodiment, initiating the color calibration includes causing the object to momentarily assume one or more colors, to cycle through a series of colors, to turn on and off repeatedly, or to perform another action or actions that make it easy to identify the object in one or more images taken by an optical sensor.

At block 788, the computing device determines a position of the object in the image or images. How the object is located depends on what action or actions were taken when the color calibration was initiated. For example, if a specific color was assumed by the object, then locating the object includes identifying those pixels in the image that correspond to the specific color. If the object is cycled on and off, then groups of pixels that change in a similar manner between images may be identified as representing the object. Other techniques for locating the object can also be used.

At block 789, the object is caused to assume a predefined color. One or more images are taken of everything in the field of view of an optical sensor while the object has assumed the predefined color.

At block 790, the computing device determines the set of colors of the object that are observed when the object assumed the predefined color. This determination is made by taking one or more images by the optical sensor, and analyzing the colors of pixels that are known to represent the object. The computing device sets color value thresholds for the predetermined color such that all pixels that represent the object meet the color thresholds.

At block 791, the computing device determines whether there are any additional predefined colors that still need to be sampled. If there are additional predefined colors remaining, the method repeats blocks 789 and 790 for the remaining colors. If there are no additional predefined colors, the method continues to block 792. In one embodiment, the predefined colors include three primary colors (e.g., red, green and blue). In another embodiment, the predefined colors include three primary colors and three secondary colors (e.g., yellow, cyan and magenta). Alternatively, the predefined colors may include three primary colors and more than three secondary colors, or three primary colors, three secondary colors and one or more additional colors (e.g., tertiary colors).

At block 792, the computing device uses the sampled colors to interpolate additional sets of colors that will be observed by the optical sensor if the object assumes other colors. For example, if a first set of observed colors were identified when the object was red, and a second set of observed colors were identified when the object was green, then a third set of colors may be interpolated if the object were to assume a yellow color. Additional colors can be interpolated based on known relationships between different color hues and/or intensities. For each interpolated set of colors, color thresholds are determined. The more colors that are sampled, the more accurate the interpolations become.

At block 793, for each predefined color and each other color that the object might assume, the computing device determines whether a threshold amount of the associated set of colors (measured or interpolated) are included in the background of the image.

At block 794, the computing device excludes those predefined and other colors that cause the optical sensor to observe colors that are included in much of the background (e.g., colors that exceed the threshold). Exclusion means that the computing device will not direct (or otherwise allow) the object to assume these colors. Exclusion may be exclusion from a list or table of available trackable colors. Typically, more colors will be available in dark lighting conditions (e.g., when the background is mostly black). The method then ends.

It should be noted that the computing device in one embodiment can distinguish between shades of color that are nearly imperceptible to the human eye. Therefore, even if the background is filled with different shades of green, there will usually still be some shades of green that the object can assume, and still be trackable.

Once calibration has occurred, the object may be tracked by searching within images for groups of pixels having a specific set of colors. In one embodiment, an edge transformation may be performed during tracking to verify the shape of the object. If the shape of the object is not as expected, than a recalibration may be performed.

The calibration achieved by methods 600, 686, 750 and 786 will typically remain accurate so long as lighting conditions remain constant and the background image does not change. However, if the room lighting changes (e.g., as the sun goes down, or if a lamp is turned on or off), or if the background changes (e.g., if a new person is now in the view of the optical sensor), then the calibration may no longer be accurate. This may make it difficult to track the object.

In one embodiment, methods 600, 686, 750 and 786 are performed while a gamma boost setting of the optical sensor is disabled. In a further embodiment, the images taken by the optical sensor are raw images.

On occasion, lighting conditions may vary depending on the location of the object. For example, the object may be held under a skylight when calibration is initially performed, and may periodically be moved away from the skylight while the object is tracked. In such instances, the computing device may perform multiple calibrations for the object, and determine which calibration to apply to the object based on the where in the image the object is detected. For example, a first calibration may be taken in a spotlight, and a second calibration may be taken outside of the spotlight. When the object is moved in the spotlight, the first calibration settings may be used, and when the object is moved outside of the spotlight, the second calibration settings may be used.

**Figure 8A** illustrates a flow diagram of one embodiment for a method 850 of performing a partial recalibration of a tracking system. The method may be performed by processing logic that may comprise hardware (e.g., circuitry, dedicated logic, programmable logic, microcode, etc.), software (such as instructions run on a processing device), or a combination thereof. In one embodiment, method 850 is performed by computing device 115 of **Figure 1.**

Referring to **Figure 8A,** at block 855, a computing device initiates a partial recalibration. In one embodiment, the partial recalibration includes a color reset or color update. In one embodiment, the partial recalibration is performed periodically (e.g., every minute, every 30 seconds, etc.). In another embodiment, the partial recalibration is performed continuously. In another embodiment, partial recalibration is performed upon receiving user input. Alternatively, the partial recalibration may be performed whenever a location of the object becomes uncertain. In one embodiment, partial recalibration is performed when an exposure setting of the optical sensor is changed. In one embodiment, partial recalibration is performed when tracking fails. Other actions may also trigger a color reset.

In one embodiment, if environment lighting or a background is detected to change, partial recalibration may be performed. For example, if someone were to turn on a green light, then color calibration would be off. What used to be red would now be a red-green. Therefore, a color that the processing device is looking for is no longer the color of the object. In one embodiment, the computing device can accurately predict what colors should be output by the object when the object is made to assume a particular color (including object emitted color and environment color contribution). If the detected color of the object varies from what is predicted, the computing device may detect that lighting conditions of the environment have changed. Additionally, the computing device may store an image that was taken during initial calibration (e.g., an image taken while the object was not emitting any color). This image may periodically be compared to current images to determine if the background has changed.

At block 860, the processing device causes the object to emit no color (e.g., turn off multi-colored light emitter). At block 865, the optical sensor takes an image while the object is not emitting any color. At block 870, the processing device causes the object to emit that previously used color. At block 875, the optical sensor may take another image. Thus, the partial recalibration may include strobing fewer than three colors (e.g., just one color) when object location is lost. For example, the object could be made to quickly turn off and on emission of a currently assigned trackable color.

At block 880, the processing device may locate the object by identifying pixels that have changed between the two taken images. At block 885, the processing device redetermines the trackable colors. Redetermining the trackable colors includes rechecking each color, which can be a processor intensive task. Accordingly, in one embodiment an image is stored for performing the checking, and block 885 is performed over a span of frames. By only determining whether a fraction of the colors is a trackable color each frame, processor performance may not be degraded. For example, if 360 colors need to be checked, and a single color is checked each frame (each frame lasting 1/60 of a second), then all colors may be checked in 6 seconds.

One or more of the blocks of method 850 may be omitted, depending on a type of partial recalibration that is to be performed and/or based on a trigger that initiated the partial recalibration. For example, in one embodiment, blocks 860-880 are not performed. In such an embodiment, the processing device may continuously recompute the trackable colors by masking out a known location of the object, and using the remaining environment colors to update the trackable colors. In another example, if the partial recalibration is performed while the position of the object is still known to a high degree of certainty, block 880 may not be performed.

**Figure 8B** illustrates a flow diagram of one embodiment for a method 887 of recalibrating a tracking system upon changing an exposure setting of an optical sensor. The method may be performed by processing logic that may comprise hardware (e.g., circuitry, dedicated logic, programmable logic, microcode, etc.), software (such as instructions run on a processing device), or a combination thereof. In one embodiment, method 887 is performed by computing device 115 of **Figure 1.**

Referring to **Figure 8B,** at block 888, a computing device changes an exposure setting of an optical sensor. The exposure setting may be changed in response to a game selecting a new image quality value or manually selecting a new exposure setting. Games that use augmented reality (which show an image of a player as well as virtual object) typically require longer exposure than games that do not use augmented reality. A longer exposure provides better image quality.

If a game does not use augmented reality, a low exposure setting is typically used. The low exposure setting reduces color saturation, increases tracking quality, and reduces motion blur. With a lower exposure setting, environment colors are dim, and the object is comparatively bright. The higher the exposure setting, the dimmer the object is in comparison to the environment colors. Therefore, the ratio of the objects emitted color brightness to environment brightness is inversely proportional to the exposure setting.

In one embodiment, a tracking quality value is used to determine the exposure setting. If the tracking quality is set high, then the exposure setting is low, and if the tracking quality is set low, then the exposure setting is high. A game may also set a maximum exposure setting. Both exposure and gain (sensor gain) vary linearly. For example, a 100 exposure and 2 gain is the same as 200 exposure and 1 gain. Increased gain provides a brighter image at expense of noise. Increased exposure provides a brighter image at expense of motion blur and tracking quality. The maximum exposure setting determines how much of image brightness will be achieved through the exposure setting, and how much will be achieved through the gain setting. In one embodiment, a game can dynamically change these settings at any time.

At block 889, the processing device causes the object to emit no color, and at block 890, the optical sensor takes an image. Then, at block 891, the processing device recomputes the available trackable colors. In the optical sensor each pixel can have 0 to 255 counts (in an 8 bit optical sensor). Alternatively, each pixel of the optical sensor may have more counts if a high dynamic range optical sensor is used (e.g., a 16 bit optical sensor). A pixel becomes saturated if it reaches 255 counts. The object is typically made to emit color at an intensity that, when added to environment color, will be at a brightness of slightly less than the saturation value (e.g., at 235). This provides a buffer, so as the object is moved through a room that has lighter and darker areas, the object colors don’t saturate, or only saturate a little.

When a pixel becomes saturated, the color can get brighter, but this increased brightness will not be recognized by the pixel. If one color is saturated, the differences between colors changes (changing hue). Additionally, the shape of the object can change as saturation occurs, because edge detection algorithms may no longer work properly. Therefore, when the exposure is increased, the processing device may not be able to find the object using previously computed trackable colors. Accordingly, in one embodiment new trackable colors are determined whenever the exposure is changed.

**Figure 8C** illustrates a flow diagram of one embodiment for a method 892 of mapping color variation of an object and/or vignetting of an optical sensor. The method may be performed by processing logic that may comprise hardware (e.g., circuitry, dedicated logic, programmable logic, microcode, etc.), software (such as instructions run on a processing device), or a combination thereof. In one embodiment, method 892 is performed by computing device 115 of **Figure 1.** In one embodiment, method 892 is performed while a room is dark.

Referring to **Figure 8C,** at block 893, a computing device directs a user to hold an object at a particular region (e.g., at a center of an optical sensor's field of view). The computing device further directs the user to rotate the object along multiple axes. At block 894, the optical sensor takes images as the object is rotated.

The object may not have color uniformity for any colors. For example, when the object is made to assume red, one side of the object may be redder than another side, and when the object is made to assume blue, one side of the object may be bluer (more brightly blue) than the other side. For example, there may be a 15% color variance across the surface of the object.

The orientation of the object can be tracked using inertial sensors such as accelerometers, gyroscopes and magnetometers. Therefore, as the object is rotated, the exact orientation at any given moment can be identified. In one embodiment, different brightness values are determined for multiple orientations of the object. These brightness levels and angles may be used at block 895 to generate a map of the color variances of the object. A separate map may be generated for each of the primary colors.

Therefore, as the object is moved and rotated, the computing device may use the color mappings to determine whether detected color changes are due to changes in environment lighting, or due to the color variance of the object itself. The map for a particular object may not change over time. Therefore, the maps may be stored, and later used during object tracking.

Optical sensors typically have vignetting, which causes a reduction in image brightness at the periphery of the optical sensor's field of view as compared to the center of the optical sensor's field of view. However, the exact vignetting experienced by each optical sensor is different. Accordingly, at block 896, the processing device directs a user to move the object in a motion pattern. As the object is moved through the pattern, at block 897 the optical sensor takes images of the object. The pattern may be a pattern in which the object is moved around a periphery of the field of view of the optical sensor, and in which the object is moved to the center of the field of view of the optical sensor.

At block 898, the optical sensor's vignetting is recorded. The differences in brightness of the object at different regions of the optical sensor's field of view are used to identify locations where vignetting occurs and a magnitude of the vignetting at those locations. Since the variations of color brightness due to object orientation have already been computed, such variances may be subtracted out before computing vignetting. The vignetting of the optical sensor will not change, therefore the vignetting map can be stored. During tracking, the processing device can adjust for vignetting depending on where in an image the object is detected.

Method 892 in one embodiment should be performed in a dark room to ensure that color variations are not caused by environment lighting. By performing method 892, processing device may use tighter color thresholds, which can provide a greater availability of trackable colors. In one embodiment, color thresholds used for selecting trackable colors are set based on a union of the color extremes of the different orientations of the object color map.

**Figures 9A-9E** illustrate calibration results that are achieved after performing one or more of methods 600, 686, 750, 786, 850, 887 and 892.

**Figure 9A** includes calibration results 900 that include an image 902, a color graph 906 and object color settings 914. The image 902 was taken in a dark room, and includes an object 904. Since the image was taken in a dark room, the rest of the image (background) is black. As illustrated, the object 904 is a red circle or ball.

The color graph 906 is a two dimensional graph in the U-V color space, and includes a data point 912 for each color that the object was made to assume (e.g., one for each primary color). Each data point 912 represents a sample of the color of the object when it was directed to assume a predefined color. In one embodiment, each data point 912 represents the average of the set of colors that are observed when the object is made to assume a predefined color. Alternatively, each data point 912 may represent the median color of the observed set of colors. In another embodiment, each data point 912 represents the color that the object was directed to assume.

The multi-color hexagon 908 represents the theoretical ideal for each possible color (e.g., perfect saturation, perfect brightness, perfect hue). The angle of line 910, extending from the origin of the graph 906 to the hexagon 908, represents the present color of the object 904. Color saturation is represented as a distance from the origin. Any point along the hexagon 908 is a combination of two primary colors. As shown, the line points to a corner of the hexagon 908 that represents true red. The object color settings 914 also show that the object is currently programmed with the color coordinates R=1, G=0, B=0, where R is red, G is green and B is blue. This color setting is represented in the U-V color space as U=-0.17, V=0.50. Though a U-V color space is used herein, other color spaces are also possible. For example, the RGB color space may also be used.

**Figure 9B** includes calibration results 901 that reflect the calibration results 900 of **Figure 9A** with an updated color graph 907 that also shows current color data (e.g., that is being collected in real time by the optical sensor). The updated color graph 907 includes a histogram 915 of pixels that are from the object 904. The updated color graph 907 also includes two sets of thresholds 914 and 916. The set of thresholds 914 (shown as a red box) represents the upper and lower U and V color values that include the set of colors of the object when the object assumes true red. Therefore, when calibration was performed, it was determined that no pixel of the object was above a first U value or below a second U value, and that no pixel was above a first V value or below a second V value. These upper and lower values form a rectangle in the U-V space, as shown by the set of thresholds 914. The second set of thresholds 916 (shown as a yellow box) represents the upper and lower U and V color values that include the set of colors of the object currently. If calibration was successful, then the two sets of thresholds 914 and 916 should overlap.

**Figure 9C** includes calibration results 930 that reflect the calibration results 901 of **Figure 9B** with an updated color graph 909 that shows current color data after a light has been turned on in the imaged scene. As shown, a new image 903 now includes a background that includes various shades of red.

The updated color graph 909 includes a new histogram 917 of pixels that are from the object 904. As shown, the set of thresholds 914 that represents the thresholds that were established when calibration was performed are unchanged. However, by introducing a light to the imaged scene, the colors of the object that are observed by the optical sensor have changed. Therefore, a new set of thresholds 922 (shown as a yellow box) represents the upper and lower U and V color values that currently include the set of colors of the object now that the light has been introduced. Without adjusting for the room light, the system is expecting the object to have the previously calibrated colors. However, by adding the room light, the object's colors and brightness have changed. Accordingly, some of the pixels of the object in the image are no longer located using the calibrated values.

**Figure 9D** includes new calibration results 932 after the system has undergone a partial recalibration. As shown, the image 903 is unchanged from the image 903 of **Figure 9C.** However, an updated color graph 935 is shown. In the updated color graph 935, since the image is unchanged, the same set of current thresholds 922 needed to include all pixels of the object are shown. However, after the color reset, new sets of UV thresholds 937 are used.

**Figure 9E** includes calibration results 940 that include an image 942, a color graph 954, object color settings 958, a full color spectrum 950, and a spectrum of available colors 970. The image 942 includes an object 944 and multiple background items 946. The background items 946 are green items. In the shown calibration results 940, a current color of the object is set to a shade of green, shown by a lines 956 and 948. Because of the green background items, a large portion of the green color space is unavailable (are not trackable colors). This can be seen by comparing the full color spectrum 950 to the spectrum of available colors 970.

Since the object 944 is currently set to a shade of green, it may be difficult to distinguish the object 944 from the green background items. Note that there are still some shades of green that are available, shown in the spectrum of available colors 970. For example, shades of blue-green are available, as are shades of yellow-green.

**Figure 10** illustrates hardware and user interfaces that may be used to determine controller location, in accordance with one embodiment of the present invention. **Figure 10** schematically illustrates the overall system architecture of the Sony® Playstation 3® entertainment device, a console that may be compatible for implementing a three-dimensional controller locating system in accordance with one embodiment of the present invention. A system unit 1400 is provided, with various peripheral devices connectable to the system unit 1400. The system unit 1400 comprises: a Cell processor 1428; a Rambus® dynamic random access memory (XDRAM) unit 1426; a Reality Synthesizer graphics unit 1430 with a dedicated video random access memory (VRAM) unit 1432; and an I/O bridge 1434. The system unit 1400 also comprises a Blu Ray® Disk BD-ROM® optical disk reader 1440 for reading from a disk 1440a and a removable slot-in hard disk drive (HDD) 1436, accessible through the I/O bridge 1434. Optionally the system unit 1400 also comprises a memory card reader 1438 for reading compact flash memory cards, Memory Stick® memory cards and the like, which is similarly accessible through the I/O bridge 1434.

The I/O bridge 1434 also connects to multiple Universal Serial Bus (USB) 2.0 ports 1424; a gigabit Ethernet port 1422; an IEEE 802.11b/g wireless network (Wi-Fi) port 1420; and a Bluetooth® wireless link port 1418 capable of supporting of up to seven Bluetooth connections.

In operation, the I/O bridge 1434 handles all wireless, USB and Ethernet data, including data from one or more game controllers 1402-1403. For example when a user is playing a game, the I/O bridge 1434 receives data from the game controller 1402-1403 via a Bluetooth link and directs it to the Cell processor 1428, which updates the current state of the game accordingly.

The wireless, USB and Ethernet ports also provide connectivity for other peripheral devices in addition to game controllers 1402-1403, such as: a remote control 1404; a keyboard 1406; a mouse 1408; a portable entertainment device 1410 such as a Sony Playstation Portable® entertainment device; a video camera such as an EyeToy® video camera 1412; a microphone headset 1414; and a microphone 1415. Such peripheral devices may therefore in principle be connected to the system unit 1400 wirelessly; for example the portable entertainment device 1410 may communicate via a Wi-Fi ad-hoc connection, whilst the microphone headset 1414 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 1416 may be connected to the system unit via a USB port 1424, enabling the reading of memory cards 1448 of the kind used by the Playstation® or Playstation 2® devices.

The game controllers 1402-1403 are operable to communicate wirelessly with the system unit 1400 via the Bluetooth link, or to be connected to a USB port, thereby also providing power by which to charge the battery of the game controllers 1402-1403. Game controllers 1402-1403 can also include memory, a processor, a memory card reader, permanent memory such as flash memory, light emitters such as LEDs or infrared lights, microphone and speaker for ultrasound communications, an acoustic chamber, a digital camera, an internal clock, a recognizable shape such as a spherical section facing the game console, and wireless communications using protocols such as Bluetooth®, WiFi™, etc.

Game controller 1402 is a controller designed to be used with two hands, and game controller 1403 is a single-hand controller with a ball attachment, as previously described in **Figures 2A-2B.** In addition to one or more analog joysticks and conventional control buttons, the game controller is susceptible to three-dimensional location determination. Consequently gestures and movements by the user of the game controller may be translated as inputs to a game in addition to or instead of conventional button or joystick commands. Optionally, other wirelessly enabled peripheral devices such as the Playstation™ Portable device may be used as a controller. In the case of the Playstation™ Portable device, additional game or control information (for example, control instructions or number of lives) may be provided on the screen of the device. Other alternative or supplementary control devices may also be used, such as a dance mat (not shown), mocap balls (not shown), a light gun (not shown), a steering wheel and pedals (not shown) or bespoke controllers, such as a single or several large buttons for a rapid-response quiz game (also not shown).

The remote control 1404 is also operable to communicate wirelessly with the system unit 1400 via a Bluetooth link. The remote control 1404 comprises controls suitable for the operation of the Blu Ray™ Disk BD-ROM reader 1440 and for the navigation of disk content.

The Blu Ray™ Disk BD-ROM reader 1440 is operable to read CD-ROMs compatible with the Playstation and PlayStation 2 devices, in addition to conventional pre-recorded and recordable CDs, and so-called Super Audio CDs. The reader 1440 is also operable to read DVD-ROMs compatible with the Playstation 2 and PlayStation 3 devices, in addition to conventional pre-recorded and recordable DVDs. The reader 1440 is further operable to read BD-ROMs compatible with the Playstation 3 device, as well as conventional pre-recorded and recordable Blu-Ray Disks.

The system unit 1400 is operable to supply audio and video, either generated or decoded by the Playstation 3 device via the Reality Synthesizer graphics unit 1430, through audio and video connectors to a display and sound output device 1442 such as a monitor or television set having a display 1444 and one or more loudspeakers 1446. The audio connectors 1450 may include conventional analogue and digital outputs whilst the video connectors 1452 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 1428. The Playstation 3 device's operating system supports Dolby® 5.1 surround sound, Dolby® Theatre Surround (DTS), and the decoding of 7.1 surround sound from Blu-Ray® disks.

In one embodiment, the video camera 1412 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 1400. The camera LED indicator is arranged to illuminate in response to appropriate control data from the system unit 1400, for example to signify adverse lighting conditions. Embodiments of the video camera 1412 may variously connect to the system unit 1400 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs. In another embodiment the camera is an infrared camera suitable for detecting infrared light.

In general, in order for successful data communication to occur with a peripheral device such as a video camera or remote control via one of the communication ports of the system unit 1400, an appropriate piece of software such as a device driver should be provided. Device driver technology is well-known and will not be described in detail here, except to say that the skilled man will be aware that a device driver or similar software interface may be required in the present embodiment described.

**Figure 11** illustrates additional hardware that may be used to process instructions, in accordance with one embodiment of the present invention. **Figure 11** illustrates the components of a cell processor 1500, which may correspond to cell processor 1428 of **Figure 10,** in accordance with one embodiment of the present invention. The Cell processor 1500 of **Figure 11** has an architecture comprising four basic components: external input and output structures comprising a memory controller 1560 and a dual bus interface controller 1570A, B; a main processor referred to as the Power Processing Element 1550; eight co-processors referred to as Synergistic Processing Elements (SPEs) 1510A-H; and a circular data bus connecting the above components referred to as the Element Interconnect Bus 1580. The total floating point performance of the Cell processor is 218 GFLOPS, compared with the 6.2 GFLOPs of the Playstation 2 device's Emotion Engine.

The Power Processing Element (PPE) 1550 is based upon a two-way simultaneous multithreading Power 1470 compliant PowerPC core (PPU) 1555 running with an internal clock of 3.2 GHz. It comprises a 512 kB level 2 (L2) cache and a 32 kB level 1 (LI) cache. The PPE 1550 is capable of eight single position operations per clock cycle, translating to 25.6 GFLOPs at 3.2 GHz. The primary role of the PPE 1550 is to act as a controller for the Synergistic Processing Elements 1510A-H, which handle most of the computational workload. In operation the PPE 1550 maintains a job queue, scheduling jobs for the Synergistic Processing Elements 1510A-H and monitoring their progress. Consequently each Synergistic Processing Element 1510A-H runs a kernel whose role is to fetch a job, execute it and synchronize it with the PPE 1550.

Each Synergistic Processing Element (SPE) 1510A-H comprises a respective Synergistic Processing Unit (SPU) 1520A-H, and a respective Memory Flow Controller (MFC) 1540A-H comprising in turn a respective Dynamic Memory Access Controller (DMAC) 1542A-H, a respective Memory Management Unit (MMU) 1544A-H and a bus interface (not shown). Each SPU 1520A-H is a RISC processor clocked at 3.2 GHz and comprising 256 kB local RAM 1530A-H, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 1520A-H does not directly access the system memory XDRAM 1426; the 64-bit addresses formed by the SPU 1520A-H are passed to the MFC 1540A-H which instructs its DMA controller 1542A-H to access memory via the Element Interconnect Bus 1580 and the memory controller 1560.

The Element Interconnect Bus (EIB) 1580 is a logically circular communication bus internal to the Cell processor 1500 which connects the above processor elements, namely the PPE 1550, the memory controller 1560, the dual bus interface 1570A,B and the 8 SPEs 1510A-H, totaling 12 participants. Participants can simultaneously read and write to the bus at a rate of 8 bytes per clock cycle. As noted previously, each SPE 1510A-H comprises a DMAC 1542A-H for scheduling longer read or write sequences. The EIB comprises four channels, two each in clockwise and anti-clockwise directions. Consequently for twelve participants, the longest step-wise data-flow between any two participants is six steps in the appropriate direction. The theoretical peak instantaneous EIB bandwidth for 12 slots is therefore 96B per clock, in the event of full utilization through arbitration between participants. This equates to a theoretical peak bandwidth of 307.2 GB/s (gigabytes per second) at a clock rate of 3.2GHz.

The memory controller 1560 comprises an XDRAM interface 1562, developed by Rambus Incorporated. The memory controller interfaces with the Rambus XDRAM with a theoretical peak bandwidth of 25.6 GB/s.

The dual bus interface 1570A,B comprises a Rambus FlexIO® system interface 1572A,B. The interface is organized into 12 channels each being 8 bits wide, with five paths being inbound and seven outbound. This provides a theoretical peak bandwidth of 62.4 GB/s (36.4 GB/s outbound, 26 GB/s inbound) between the Cell processor and an I/O Bridge via controller 1570A and a Reality Simulator graphics unit via controller 1570B.

It is to be understood that the above description is intended to be illustrative, and not restrictive. Many other embodiments will be apparent to those of skill in the art upon reading and understanding the above description. Although the present invention has been described with reference to specific exemplary embodiments, it will be recognized that the invention is not limited to the embodiments described, but can be practiced with modification and alteration within the scope of the appended claims. Accordingly, the specification and drawings are to be regarded in an illustrative sense rather than a restrictive sense. The scope of the invention should, therefore, be determined with reference to the appended claims.

## Claims

**1.** A method of calibrating a tracking system, comprising:

locating (610), by a computing device executing a calibrating logic, an object in one or more images taken by an optical sensor by identifying a group of pixels corresponding to the object in the one or more images;
determining (615), by the computing device, environment colors included in the one or more images based on the location of the object in the one or more images, the environment colors being colors included in pixels not corresponding to the object in the one or more images;
determining (630), by the computing device, one or more trackable colors based on the environment colors included in the one or more images, wherein a color is a trackable color if a number of pixels including environment colors within a threshold color value for that color is less than a threshold number of pixels, and
instructing, by the computing device, a multi-color light emitter of the object to emit a specific color of the one or more trackable colors; and

tracking, by the computing device, the object by identifying where in subsequent images taken by the optical sensor the specific color of the one or more trackable colors is observed.

**2.** The method of claim 1, wherein locating the object in the one or more images comprises:

causing (789) the object to emit a plurality of predefined colors, in sequence, wherein the one or more images include a separate image for each of the plurality of predefined colors; and
identifying the group of pixels in each of the one or more images by identifying pixels having different colors in each of the one or more images.

**3.** The method of claim 2, further comprising:

for each predefined color of the plurality of predefined colors, determining (790) a set of colors of the object that is observed by the optical sensor when the object emits the predefined color; and
predicting (792) an additional set of colors that will be observed by the optical sensor if the object emits another color based on an interpolation of sets of colors of the object that are observed by the optical sensor for the plurality of predefined colors.

**4.** The method of claim 1, further comprising:

failing to successfully track the object; and
causing, by the computing device, the object to emit another specific color of the one or more trackable colors when failing to successfully track the object.

**5.** The method of claim 2, wherein the optical sensor has a frame rate, the method further comprising:
causing the object to emit each of the plurality of predefined colors for at least three frames of the optical sensor.

**6.** The method of claim 2, wherein the optical sensor has a frame rate, and wherein frames of the optical sensor are time synchronous with a clock of the computing device, the method further comprising:
causing the object to emit each of the plurality of predetermined colors for fewer than three frames.

**7.** The method of claim 1, wherein determining the environment colors comprises:

causing the object to emit no light, wherein the one or more images include an image taken while the object emitted no light; and
identifying colors of the object from the image taken while the object emitted no light, which represent environment colors.

**8.** The method of claim 7, further comprising:
subtracting the colors of the object in the image taken while the object emitted no light from colors of the object in the one or more images taken while the object emitted light of a predefined color to identify a true color emitted by the object.

**9.** The method of claim 1, further comprising:

periodically updating the environment colors based on momentarily causing the object to emit no light and taking an image while the object emits no light; and
re-determining the one or more trackable colors.

**10.** The method of claim 1, further comprising:

detecting a change in an exposure setting of the optical sensor; and
adjusting a brightness of the object.

**11.** The method of claim 1, further comprising:

determining a tracking quality of the tracking system based on at least one of an amount of environment light or a number of different colored additional objects in the one or more images;
if the environment light exceeds a threshold, notifying a user of the computing device to turn off lights or close blinds; and
if there are fewer than a threshold number of trackable colors, identifying to the user additional objects included in the one or more images that are causing color conflicts.

**12.** A computing apparatus, comprising:

an optical sensor (105) to take one or more images; and
a processing device (115), to execute instructions for a calibrating logic, wherein the instructions cause the processing device to:

locate an object in the one or more images by identifying a group of pixels corresponding to the object in the one or more images;
determine environment colors included in the one or more images based on the location of the object in the one or more images, the environment colors being colors included in pixels not corresponding to the object in the one or more images;
determine one or more trackable colors based on the environment colors included in the one or more images, wherein a color is a trackable color if a number of pixels including environment colors within a threshold color value for that color is less than a threshold number of pixels;
instruct a multi-color light emitter of the object to emit a specific color of the one or more trackable colors; and
track the object by identifying where in subsequent images taken by the optical sensor the specific color of the one or more trackable colors is observed.

**13.** A computer readable storage medium including instructions that, when executed by a processing device, cause the processing device to perform the method of any one of claims 1 to 11.

## Patentansprüche

**1.** Verfahren zum Kalibrieren eines Nachverfolgungssystems, das Folgendes umfasst:

Orten (610) durch eine Rechenvorrichtung, die eine Kalibrierlogik ausführt, eines Objekts in einem oder mehreren Bildern, die durch einen optischen Sensor aufgenommen worden sind, durch das Identifizieren einer Gruppe von Pixeln, die dem Objekt in dem einen oder den mehreren Bildern entsprechen;
Bestimmen (615) durch die Rechenvorrichtung von Umgebungsfarben, die in dem einen oder den mehreren Bildern enthalten sind, basierend auf dem Ort des Objekts in dem einen oder den mehreren Bildern, wobei die Umgebungsfarben Farben sind, die in Pixeln enthalten sind, die in dem einen oder den mehreren Bildern dem Objekt nicht entsprechen;
Bestimmen (630) durch die Rechenvorrichtung einer oder mehrerer nachverfolgbarer Farben basierend auf den Umgebungsfarben, die in dem einen oder den mehreren Bildern enthalten sind, wobei eine Farbe eine nachverfolgbare Farbe ist, wenn eine Zahl von Pixeln, die Umgebungsfarben innerhalb eines Schwellenfarbwertes für diese Farbe enthalten, kleiner als eine Schwellenzahl von Pixeln ist, und
Anweisen durch die Rechenvorrichtung eines Mehrfarben-Lichtsenders des Objekts, eine bestimmte Farbe der einen oder der mehreren nachverfolgbaren Farben zu emittieren; und
Nachverfolgen durch die Rechenvorrichtung des Objekts durch Identifizieren, wo in folgenden Bildern, die durch den optischen Sensor aufgenommen worden sind, die bestimmte Farbe der einen oder der mehreren nachverfolgbaren Farben beobachtet wird.

**2.** Verfahren nach Anspruch 1, wobei das Orten des Objekts i dem einen oder den mehreren Bildern Folgendes umfasst:

Veranlassen (789) des Objekts, mehrere im Voraus definierte Farben der Reihe nach zu emittieren, wobei das eine oder die mehreren Bilder ein separates Bild für jede der mehreren im Voraus definierten Farben enthalten; und

Identifizieren der Gruppe von Pixeln in jedem des einen oder der mehreren Bilder durch Identifizieren von Pixeln, die in jedem des einen oder der mehreren Bilder unterschiedliche Farben aufweisen.

**3.** Verfahren nach Anspruch 2, das ferner Folgendes umfasst:

für jede im Voraus definierte Farbe der mehreren im Voraus definierten Farben Bestimmen (790) einer Menge von Farben des Objekts, die durch den optischen Sensor beobachtet wird, wenn das Objekt die im Voraus definierte Farbe emittiert; und

Vorhersagen (792) einer zusätzlichen Menge von Farben, die durch den optischen Sensor beobachtet werden wird, wenn das Objekt eine andere Farbe emittiert, basierend auf einer Interpolation der Mengen von Farben des Objekts, die durch den optischen Sensor beobachtet werden, für die mehreren im Voraus definierten Farben.

**4.** Verfahren nach Anspruch 1, das ferner Folgendes umfasst:

Verfehlen des erfolgreichen Nachverfolgens des Objekts; und

Veranlassen durch die Rechenvorrichtung des Objekts, eine andere spezifische Farbe der einen oder der mehreren nachverfolgbaren Farben zu emittieren, wenn das erfolgreiche Nachverfolgen des Objekts verfehlt wird.

**5.** Verfahren nach Anspruch 2, wobei der optische Sensor eine Bildrate aufweist, wobei das Verfahren ferner Folgendes umfasst:
Veranlassen des Objekts, jede der mehreren im Voraus definierten Farben für mindestens drei Einzelbilder des optischen Sensors zu emittieren.

**6.** Verfahren nach Anspruch 2, wobei der optische Sensor eine Bildrate aufweist und wobei Einzelbilder des optischen Sensors zeitlich synchron mit einem Taktgeber der Rechenvorrichtung sind, wobei das Verfahren ferner Folgendes umfasst:
Veranlassen des Objekts, jede der mehreren vorgegebenen Farben für weniger als drei Einzelbilder zu emittieren.

**7.** Verfahren nach Anspruch 1, wobei das Bestimmen der Umgebungsfarben ferner Folgendes umfasst:

Veranlassen des Objekts, kein Licht zu emittieren, wobei das eine oder die mehreren Bilder ein Bild enthalten, das aufgenommen worden ist, während des Objekt kein Licht emittiert hat; und

Identifizieren von Farben des Objekts aus dem Bild, das aufgenommen worden ist, während das Objekt kein Licht emittiert hat, die die Umgebungsfarben darstellen.

**8.** Verfahren nach Anspruch 7, das ferner Folgendes umfasst:
Subtrahieren der Farben des Objekts in dem Bild, das aufgenommen worden ist, während das Objekt kein Licht emittiert hat, von Farben des Objekts in dem einen oder den mehreren Bildern, die aufgenommen worden sind, während das Objekt, das Licht einer im Voraus definierten Farbe emittiert hat, um eine wahre Farbe zu identifizieren, die von dem Objekt emittiert worden ist.

**9.** Verfahren nach Anspruch 1, das ferner Folgendes umfasst:

periodisches Aktualisieren der Umgebungsfarben basierend auf dem momentanen Veranlassen des Objekts, kein Licht zu emittieren, und Aufnehmen eines Bildes, während das Objekt kein Licht emittiert; und

erneutes Bestimmen der einen oder der mehreren nachverfolgbaren Farben.

**10.** Verfahren nach Anspruch 1, das ferner Folgendes umfasst:

Detektieren einer Veränderung in einer Belichtungseinstellung des optischen Sensors; und

Anpassen einer Helligkeit des Objekts.

**11.** Verfahren nach Anspruch 1, das ferner Folgendes umfasst:

Bestimmen einer Nachverfolgungsqualität des Nachverfolgungssystems basierend auf einer Menge von Umgebungslicht und/oder einer Anzahl verschieden farbiger zusätzlicher Objekte in dem einen oder den mehreren Bildern;
dann, wenn das Umgebungslicht einen Schwellenwert überschreitet, Benachrichtigen eines Anwenders der Rechenvorrichtung, Licht auszuschalten oder Jalousien zu schließen; und
dann, wenn weniger als eine Schwellenzahl von nachverfolgbaren Farben vorhanden sind, Identifizieren zusätzlicher Objekte, die in dem einen oder den mehreren Bildern enthalten sind, die Farbkonflikte verursachen, für den Anwender.

**12.** Recheneinrichtung, die Folgendes umfasst:

einen optischen Sensor (105), um ein oder mehrere Bilder aufzunehmen; und
eine Verarbeitungsvorrichtung (115), um Anweisungen für eine Kalibrierlogik auszuführen, wobei die Anweisungen die Verarbeitungsvorrichtung veranlassen:

in dem einen oder den mehreren Bildern ein Objekt zu orten durch Identifizieren einer Gruppe von Pixeln, die dem Objekt in dem einen oder den mehreren Bildern entsprechen;
Umgebungsfarben zu bestimmen, die in dem einen oder den mehreren Bildern enthalten sind, basierend auf dem Ort des Objekts in dem einen oder den mehreren Bildern, wobei die Umgebungsfarben Farben sind, die in Pixeln enthalten sind, die dem Objekt in dem einen oder den mehreren Bildern nicht entsprechen;
eine oder mehrere nachverfolgbare Farben zu bestimmen basierend auf den Umgebungsfarben, die in dem einen oder den mehreren Farben enthalten sind, wobei eine Farbe nachverfolgbar ist, wenn eine Zahl von Pixeln, die Umgebungsfarben innerhalb eines Schwellenfarbwertes für diese Farbe enthalten, kleiner als eine Schwellenzahl von Pixeln ist;
einen Mehrfarben-Lichtsender des Objekts anzuweisen, eine bestimmte Farbe des einen oder der mehreren nachverfolgbaren Farben zu emittieren; und
das Objekt nachzuverfolgen durch Identifizieren, wo in folgenden Bildern, die von dem optischen Sensor aufgenommen worden sind, die bestimmte Farbe der einen oder der mehreren nachverfolgbaren Farben beobachtet wird.

**13.** Computerlesbares Speichermedium, das Anweisungen enthält, die dann, wenn sie von einer Verarbeitungsvorrichtung ausgeführt werden, die Verarbeitungsvorrichtung veranlassen, das Verfahren nach einem der Ansprüche 1 bis 11 durchzuführen.

## Revendications

**1.** Procédé d'étalonnage d'un système de suivi, comprenant :

la localisation (610), par un dispositif informatique exécutant une logique d'étalonnage, d'un objet dans une ou plusieurs images prises par un capteur optique en identifiant un groupe de pixels correspondant à l'objet dans la ou les images ;
la détermination (615), par le dispositif informatique, de couleurs de l'environnement incluses dans la ou les images sur la base de l'emplacement de l'objet dans la ou les images, les couleurs de l'environnement étant des couleurs incluses dans des pixels ne correspondant pas à l'objet dans la ou les images ;
la détermination (630), par le dispositif informatique, d'une ou plusieurs couleurs pouvant être suivies sur la base des couleurs de l'environnement incluses dans la ou les images, une couleur étant une couleur pouvant être suivie si un nombre de pixels comprenant des couleurs de l'environnement dans une valeur de couleur seuil pour cette couleur est inférieur à un nombre de pixels seuil, et
l'ordre, par le dispositif informatique, à un émetteur de lumière multicolore de l'objet d'émettre une couleur spécifique de la ou des couleurs pouvant être suivies ; et
le suivi, par le dispositif informatique, de l'objet en identifiant où, dans des images ultérieures prises par le capteur optique, la couleur spécifique de la ou des couleurs pouvant être suivies est observée.

**2.** Procédé selon la revendication 1, la localisation de l'objet dans la ou les images comprenant :

le fait de faire en sorte (789) que l'objet émette une pluralité de couleurs prédéfinies, en séquence, la ou les images comprenant une image séparée pour chacune de la pluralité de couleurs prédéfinies ; et
l'identification du groupe de pixels dans chacune de la ou des images en identifiant les pixels ayant des couleurs différentes dans chacune de la ou des images.

**3.** Procédé selon la revendication 2, comprenant en outre :

pour chaque couleur prédéfinie de la pluralité de couleurs prédéfinies, la détermination (790) d'un ensemble de couleurs de l'objet qui est observé par le capteur optique lorsque l'objet émet la couleur prédéfinie ; et
la prédiction (792) d'un ensemble supplémentaire de couleurs qui sera observé par le capteur optique si l'objet émet une autre couleur sur la base d'une interpolation d'ensembles de couleurs de l'objet qui sont observés par le capteur optique pour la pluralité de couleurs prédéfinies.

**4.** Procédé selon la revendication 1, comprenant en outre :

l'échec de suivi de l'objet ; et
le fait de faire en sorte, par le dispositif informatique, que l'objet émette une autre couleur spécifique de la ou des couleurs pouvant être suivies lors de l'échec de suivi de l'objet.

**5.** Procédé selon la revendication 2, le capteur optique ayant une fréquence d'images, le procédé comprenant en outre : le fait de faire en sorte que l'objet émette chacune de la pluralité de couleurs prédéfinies pendant au moins trois trames du capteur optique.

**6.** Procédé selon la revendication 2, le capteur optique ayant une fréquence de trame, et les trames du capteur optique étant synchronisées dans le temps avec une horloge du dispositif informatique, le procédé comprenant en outre : le fait de faire en sorte que l'objet émette chacune de la pluralité de couleurs prédéterminées pendant moins de trois trames.

**7.** Procédé selon la revendication 1, la détermination des couleurs de l'environnement comprenant :

le fait de faire en sorte que l'objet n'émette aucune lumière, la ou les images comprenant une image prise alors que l'objet n'émet aucune lumière ; et
l'identification de couleurs de l'objet à partir de l'image prise alors que l'objet n'émet aucune lumière, qui représentent les couleurs de l'environnement.

**8.** Procédé selon la revendication 7, comprenant en outre : la soustraction des couleurs de l'objet dans l'image prise alors que l'objet n'émettait aucune lumière des couleurs de l'objet dans la ou les images prises alors que l'objet émettait une lumière d'une couleur prédéfinie pour identifier une couleur réelle émise par l'objet.

**9.** Procédé selon la revendication 1, comprenant en outre :

la mise à jour périodiquement des couleurs de l'environnement sur la base du fait d'amener momentanément l'objet à ne pas émettre de lumière, et de la prise d'une image pendant que l'objet n'émet pas de lumière ; et
la re-détermination de la ou des couleurs pouvant être suivies.

**10.** Procédé selon la revendication 1, comprenant en outre :

la détection d'un changement dans un réglage d'exposition du capteur optique ; et
l'ajustement d'une luminosité de l'objet.

**11.** Procédé selon la revendication 1, comprenant en outre :

la détermination d'une qualité de suivi du système de suivi sur la base d'au moins l'une d'une quantité de lumière ambiante ou d'un nombre d'objets supplémentaires de couleurs différentes dans la ou les images ;
si la lumière ambiante dépasse un seuil, la notification à un utilisateur du dispositif informatique d'éteindre les lumières ou de fermer les stores ; et
s'il y a moins d'un nombre seuil de couleurs pouvant être suivies, l'identification pour l'utilisateur des objets supplémentaires inclus dans la ou les images qui causent des conflits de couleurs.

**12.** Appareil informatique, comprenant :

un capteur optique (105) pour prendre une ou plusieurs images ; et
un dispositif de traitement (115), pour exécuter des instructions pour une logique d'étalonnage, les instructions amenant le dispositif de traitement à :

localiser un objet dans la ou les images en identifiant un groupe de pixels correspondant à l'objet dans la ou les images ;
déterminer des couleurs de l'environnement incluses dans la ou les images sur la base de l'emplacement de l'objet dans la ou les images, les couleurs de l'environnement étant des couleurs incluses dans des pixels ne correspondant pas à l'objet dans la ou les images ;
déterminer une ou plusieurs couleurs pouvant être suivies sur la base des couleurs de l'environnement incluses dans la ou les images, une couleur étant une couleur pouvant être suivie si un nombre de pixels comprenant des couleurs de l'environnement dans une valeur de couleur seuil pour cette couleur est inférieur à un nombre de pixels seuil ;
ordonner à un émetteur de lumière multicolore de l'objet d'émettre une couleur spécifique de la ou des couleurs pouvant être suivies ; et
suivre l'objet en identifiant où, dans des images ultérieures prises par le capteur optique, la couleur spécifique de la ou des couleurs pouvant être suivies est observée.

**13.** Support de stockage lisible par ordinateur comprenant des instructions qui, lorsqu'elles sont exécutées par un dispositif de traitement, amènent le dispositif de traitement à réaliser le procédé selon l'une quelconque des revendications 1 à 11.

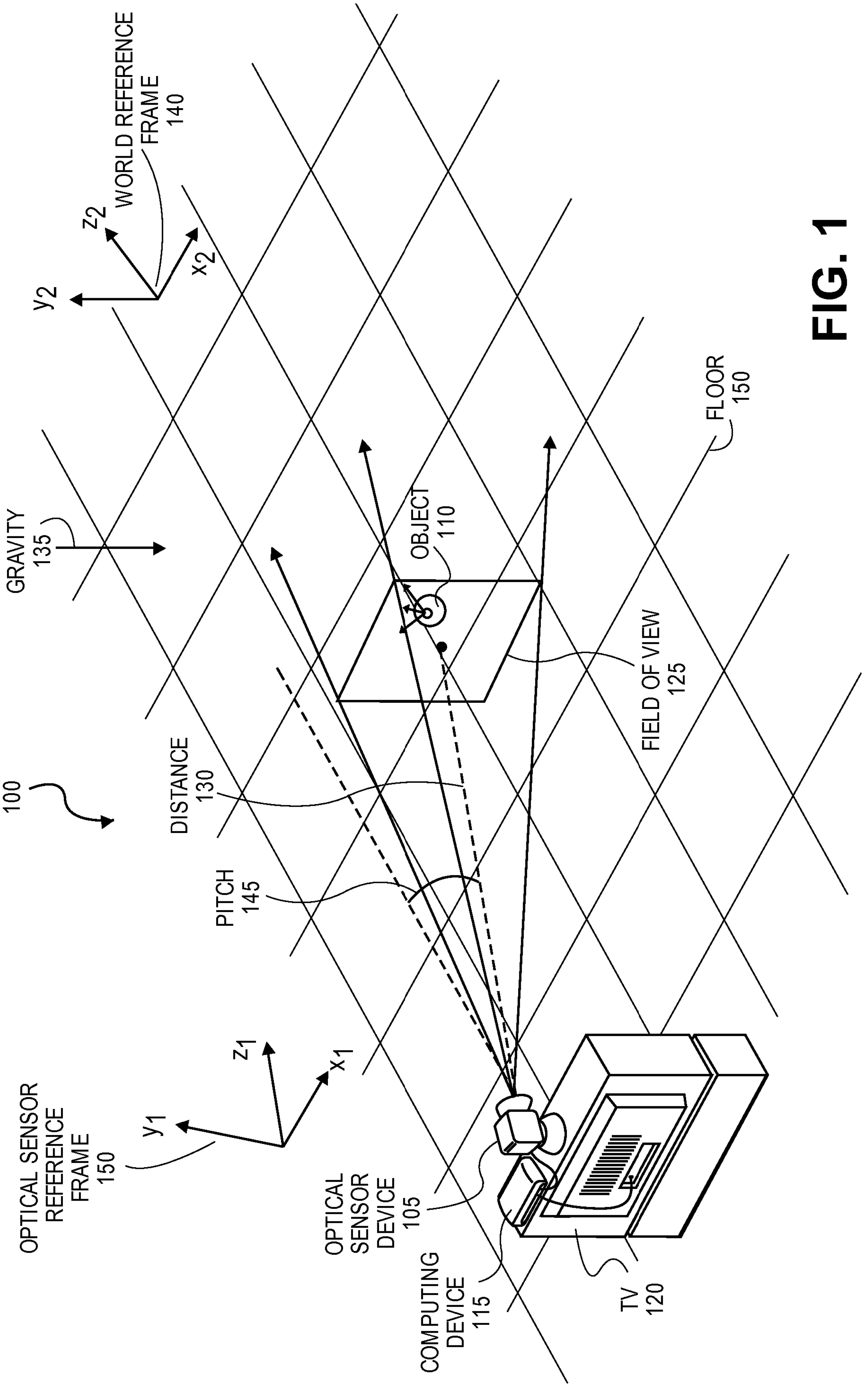
WORLD REFERENCE FRAME 140
$z_2$
$x_2$
$y_2$
GRAVITY 135
100
DISTANCE 130
PITCH 145
OBJECT 110
FIELD OF VIEW 125
FLOOR 150
OPTICAL SENSOR REFERENCE FRAME 150
$z_1$
$x_1$
$y_1$
OPTICAL SENSOR DEVICE 105
COMPUTING DEVICE 115
TV 120

FIG. 1

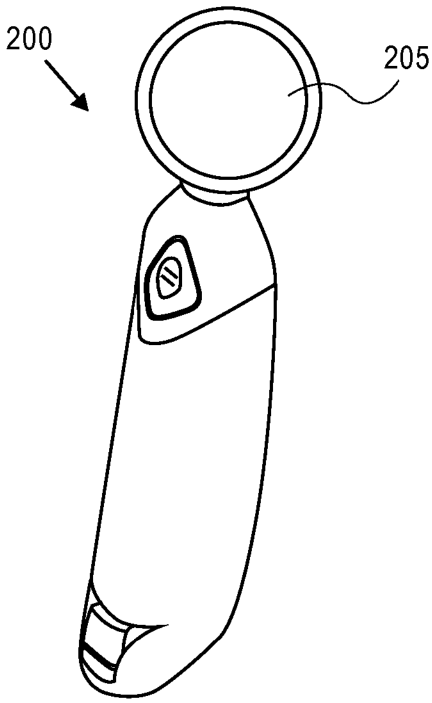


FIG. 2A

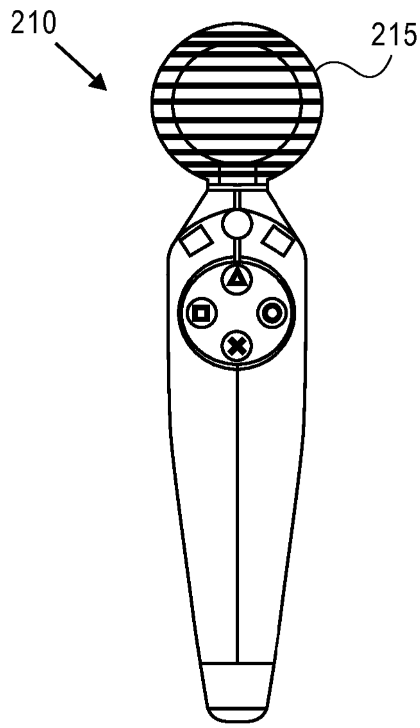


FIG. 2B

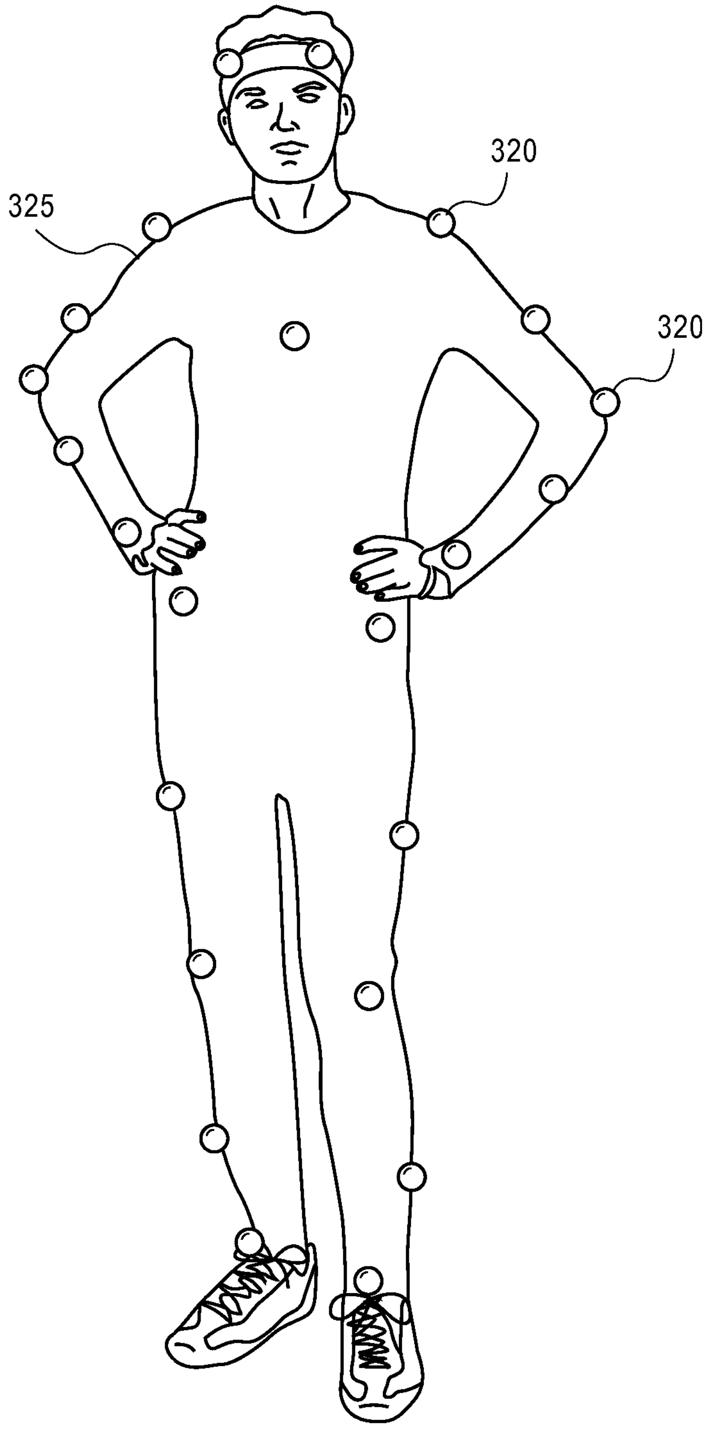


FIG. 3

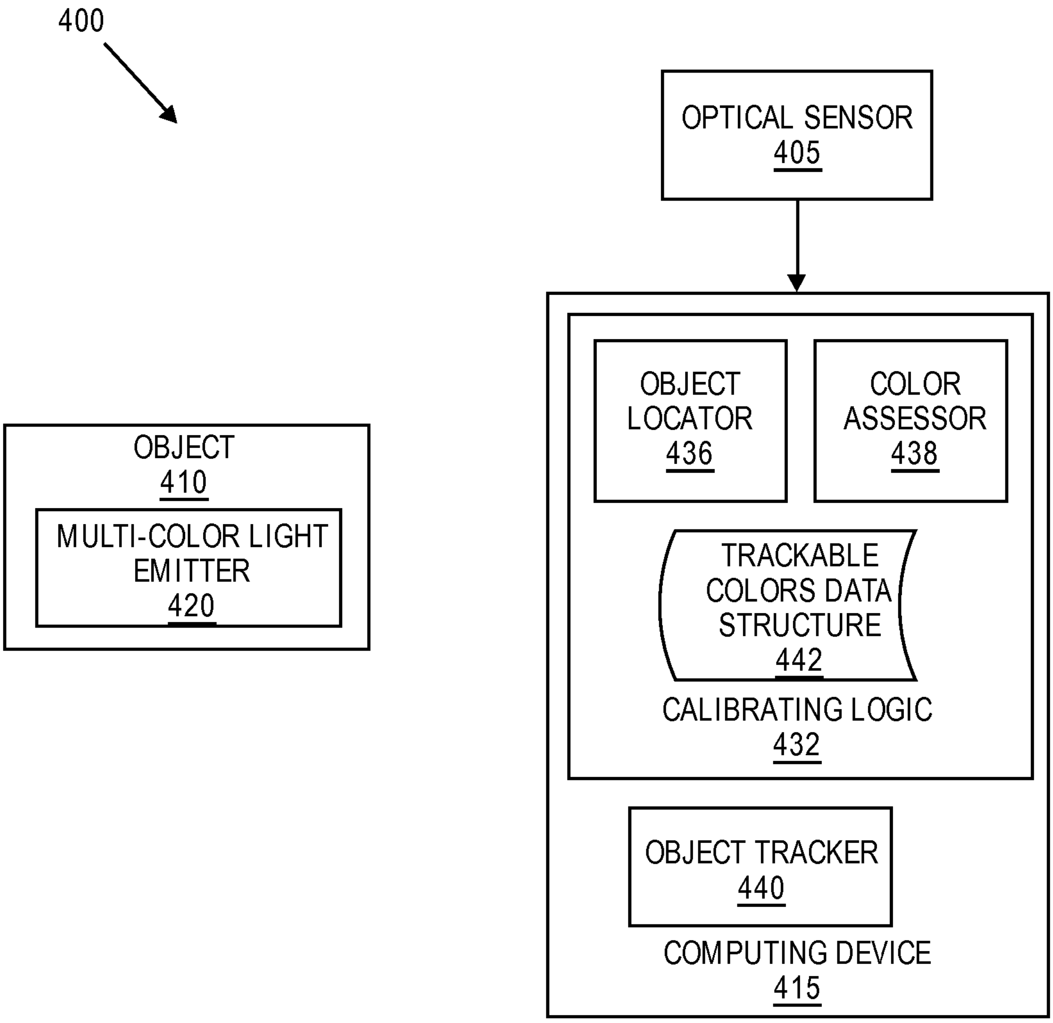
400
OPTICAL SENSOR
405
OBJECT
410
MULTI-COLOR LIGHT
EMITTER
420
OBJECT
LOCATOR
436
COLOR
ASSESSOR
438
TRACKABLE
COLORS DATA
STRUCTURE
442
CALIBRATING LOGIC
432
OBJECT TRACKER
440
COMPUTING DEVICE
415

FIG. 4

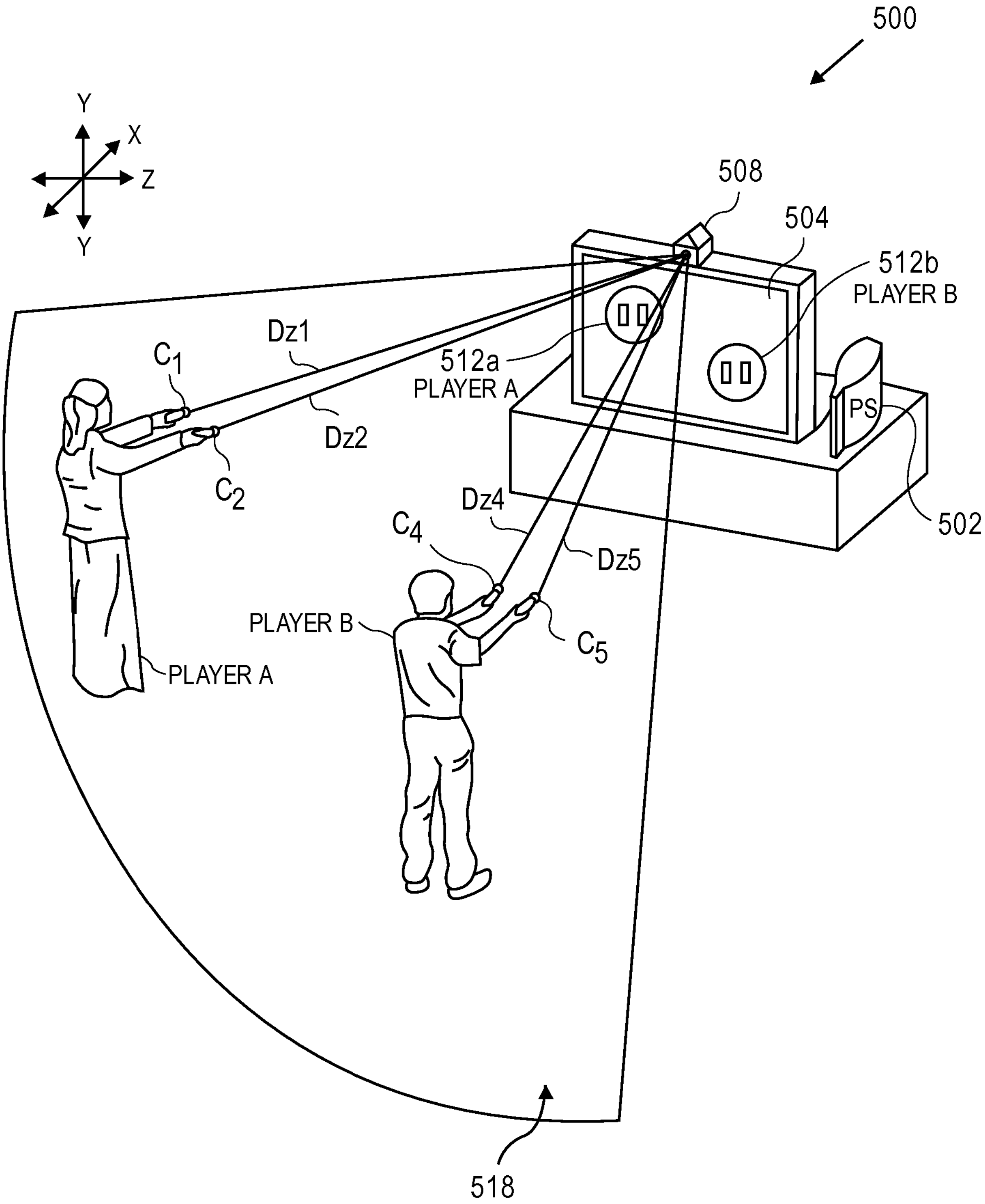
500
Y
X
Z
Y
508
504
512b
PLAYER B
Dz1
C1
512a
PLAYER A
Dz2
C2
PS
502
Dz4
C4
Dz5
PLAYER B
C5
PLAYER A
518

FIG. 5

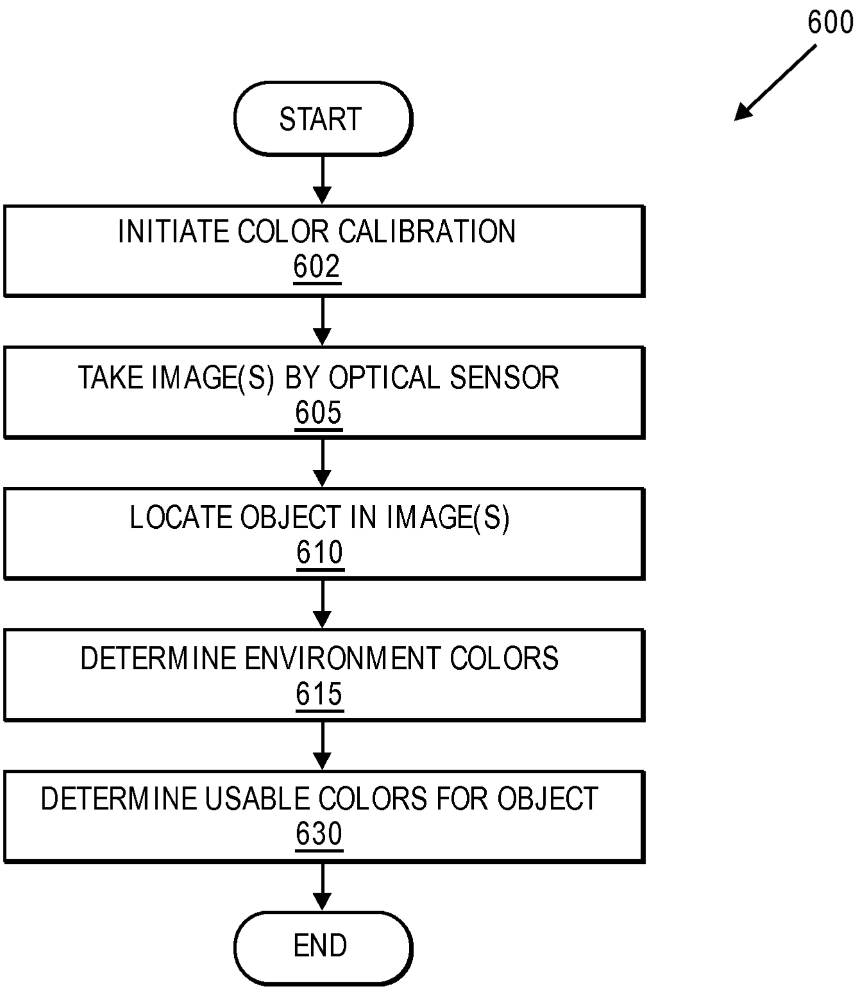
600
START
INITIATE COLOR CALIBRATION
602
TAKE IMAGE(S) BY OPTICAL SENSOR
605
LOCATE OBJECT IN IMAGE(S)
610
DETERMINE ENVIRONMENT COLORS
615
DETERMINE USABLE COLORS FOR OBJECT
630
END

FIG. 6A

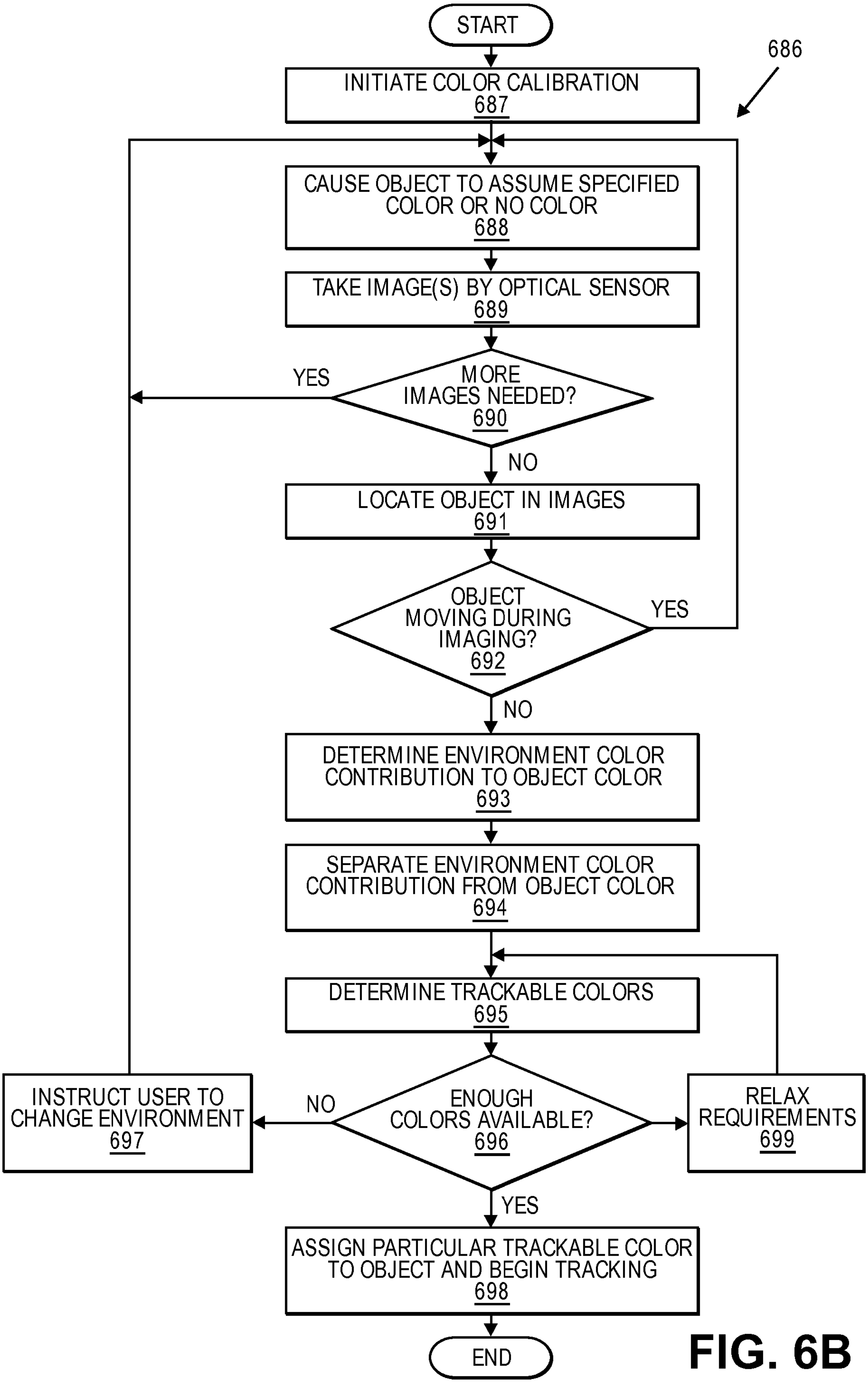
START
686
INITIATE COLOR CALIBRATION
687
CAUSE OBJECT TO ASSUME SPECIFIED COLOR OR NO COLOR
688
TAKE IMAGE(S) BY OPTICAL SENSOR
689
MORE IMAGES NEEDED?
690
YES
NO
LOCATE OBJECT IN IMAGES
691
OBJECT MOVING DURING IMAGING?
692
YES
NO
DETERMINE ENVIRONMENT COLOR CONTRIBUTION TO OBJECT COLOR
693
SEPARATE ENVIRONMENT COLOR CONTRIBUTION FROM OBJECT COLOR
694
DETERMINE TRACKABLE COLORS
695
ENOUGH COLORS AVAILABLE?
696
NO
INSTRUCT USER TO CHANGE ENVIRONMENT
697
RELAX REQUIREMENTS
699
YES
ASSIGN PARTICULAR TRACKABLE COLOR TO OBJECT AND BEGIN TRACKING
698
END

FIG. 6B

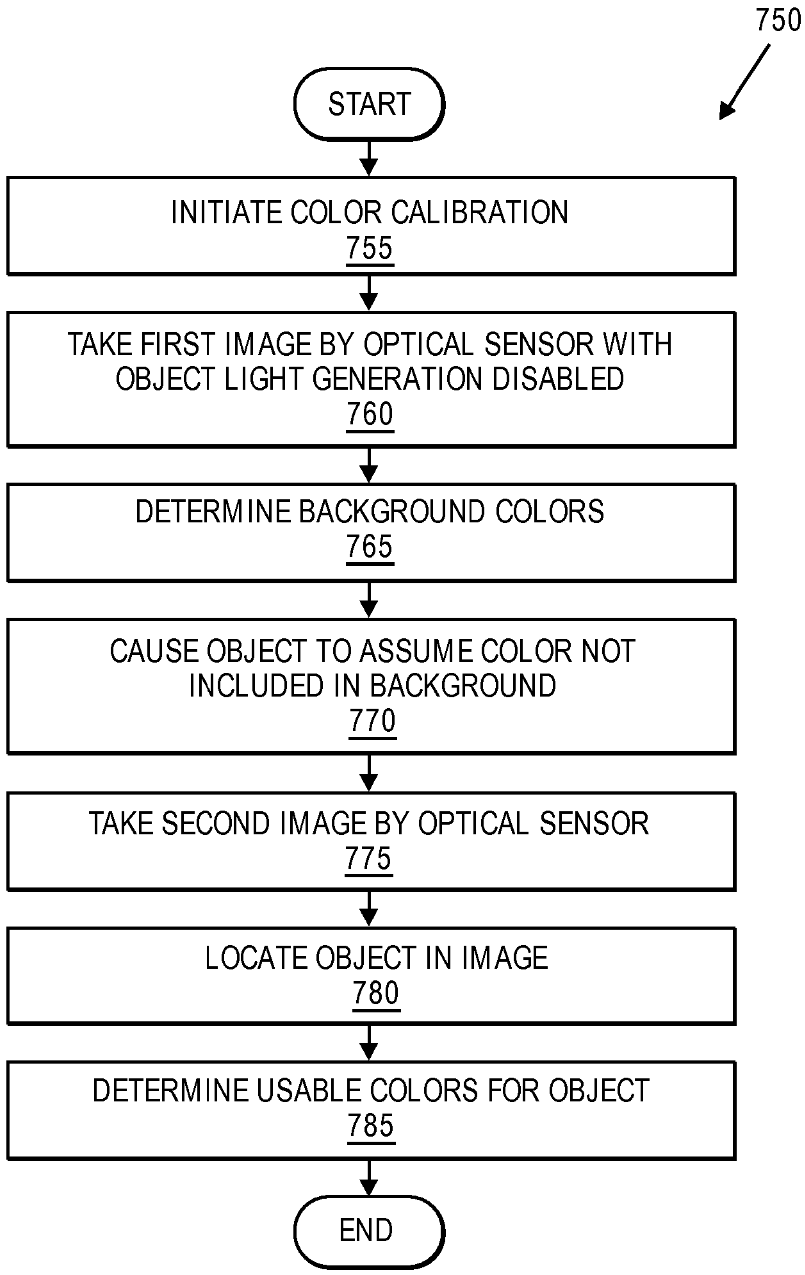
750
START
INITIATE COLOR CALIBRATION
755
TAKE FIRST IMAGE BY OPTICAL SENSOR WITH OBJECT LIGHT GENERATION DISABLED
760
DETERMINE BACKGROUND COLORS
765
CAUSE OBJECT TO ASSUME COLOR NOT INCLUDED IN BACKGROUND
770
TAKE SECOND IMAGE BY OPTICAL SENSOR
775
LOCATE OBJECT IN IMAGE
780
DETERMINE USABLE COLORS FOR OBJECT
785
END

FIG. 7A

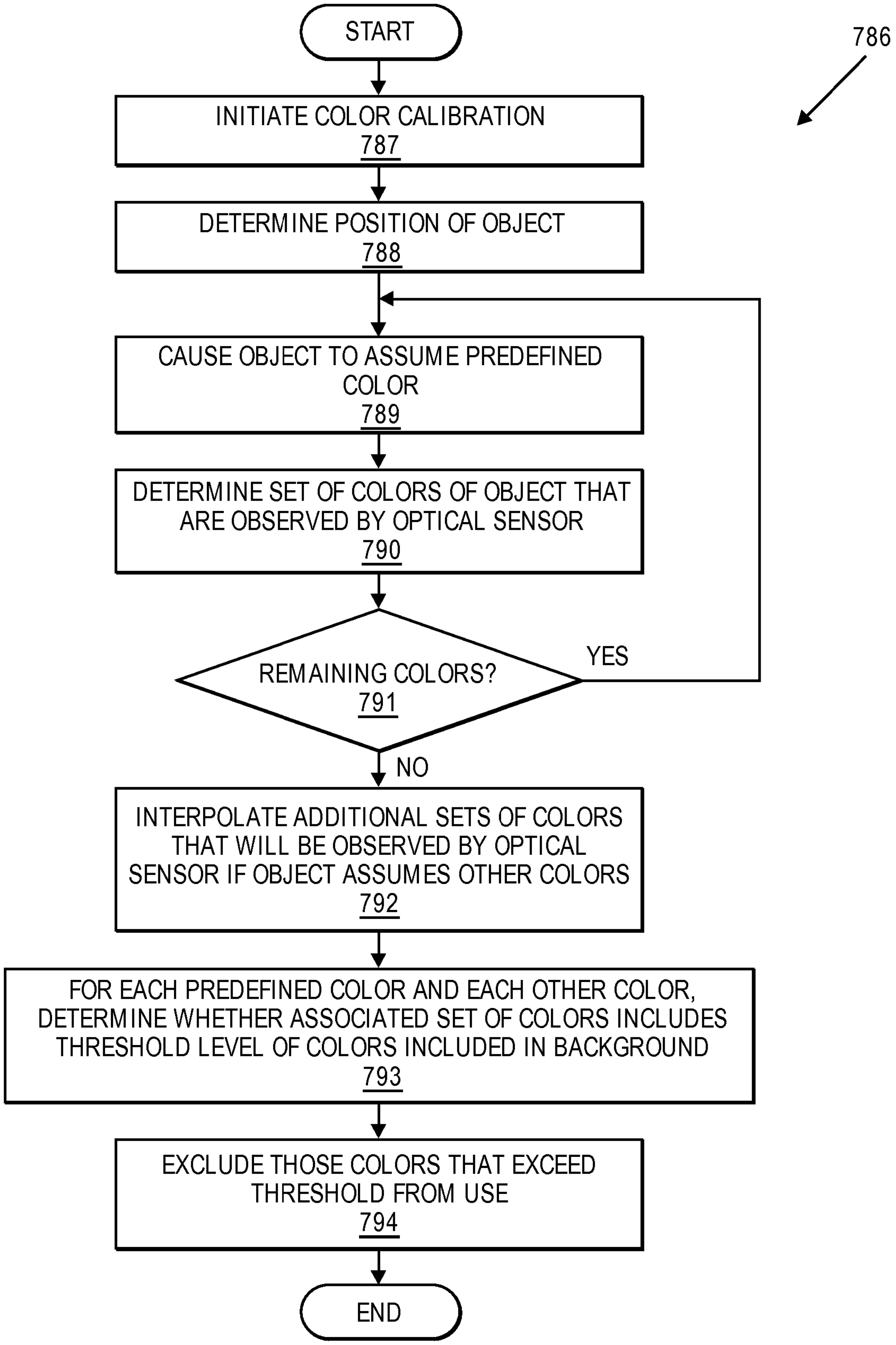
786
START
INITIATE COLOR CALIBRATION
787
DETERMINE POSITION OF OBJECT
788
CAUSE OBJECT TO ASSUME PREDEFINED COLOR
789
DETERMINE SET OF COLORS OF OBJECT THAT ARE OBSERVED BY OPTICAL SENSOR
790
REMAINING COLORS?
791
YES
NO
INTERPOLATE ADDITIONAL SETS OF COLORS THAT WILL BE OBSERVED BY OPTICAL SENSOR IF OBJECT ASSUMES OTHER COLORS
792
FOR EACH PREDEFINED COLOR AND EACH OTHER COLOR, DETERMINE WHETHER ASSOCIATED SET OF COLORS INCLUDES THRESHOLD LEVEL OF COLORS INCLUDED IN BACKGROUND
793
EXCLUDE THOSE COLORS THAT EXCEED THRESHOLD FROM USE
794
END

FIG. 7B

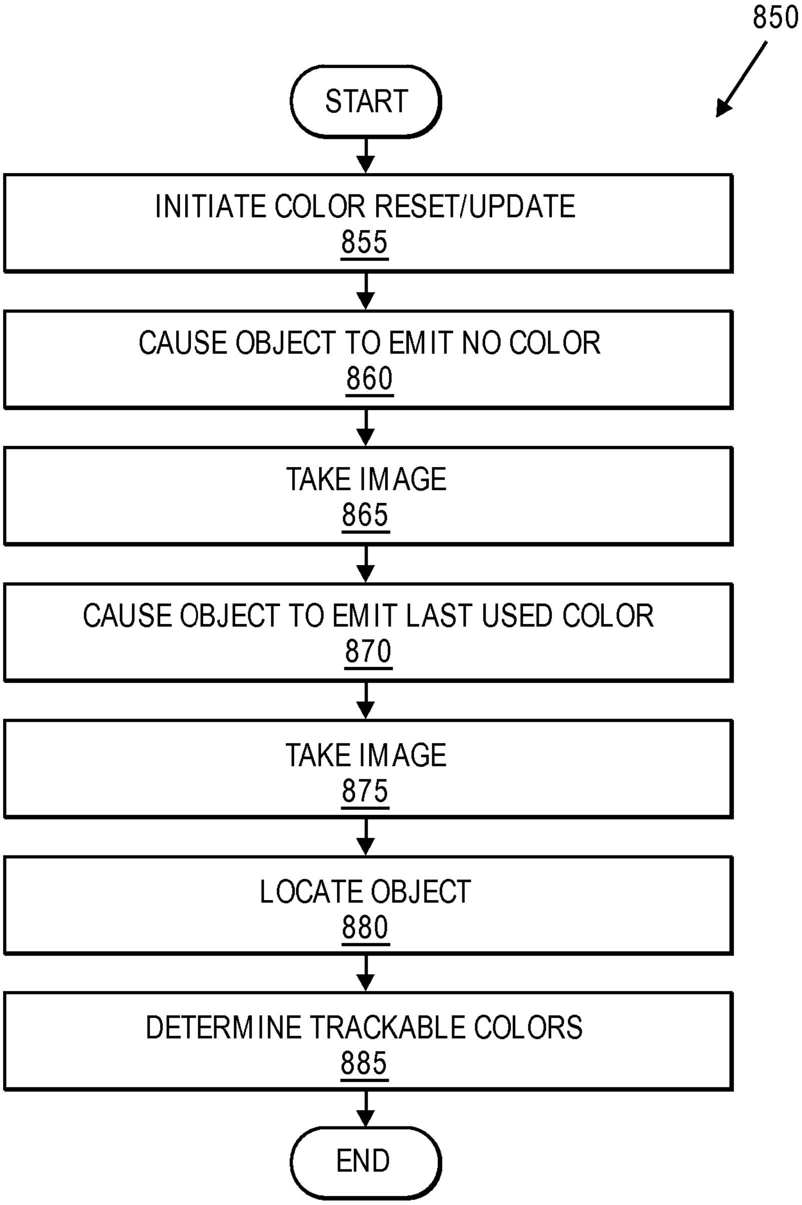
850
START
INITIATE COLOR RESET/UPDATE
855
CAUSE OBJECT TO EMIT NO COLOR
860
TAKE IMAGE
865
CAUSE OBJECT TO EMIT LAST USED COLOR
870
TAKE IMAGE
875
LOCATE OBJECT
880
DETERMINE TRACKABLE COLORS
885
END

FIG. 8A

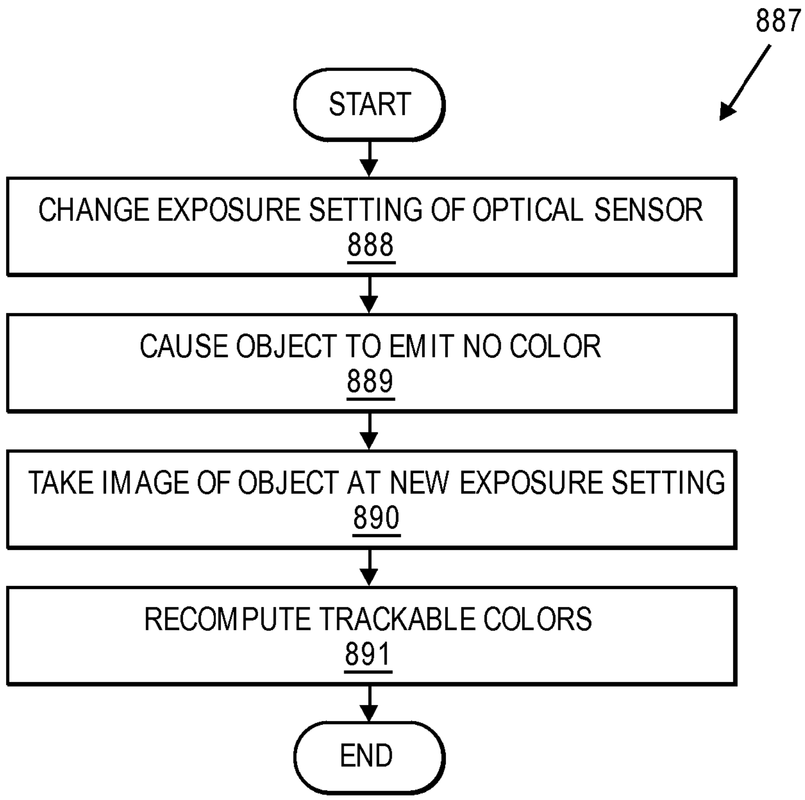
887
START
CHANGE EXPOSURE SETTING OF OPTICAL SENSOR
888
CAUSE OBJECT TO EMIT NO COLOR
889
TAKE IMAGE OF OBJECT AT NEW EXPOSURE SETTING
890
RECOMPUTE TRACKABLE COLORS
891
END

FIG. 8B

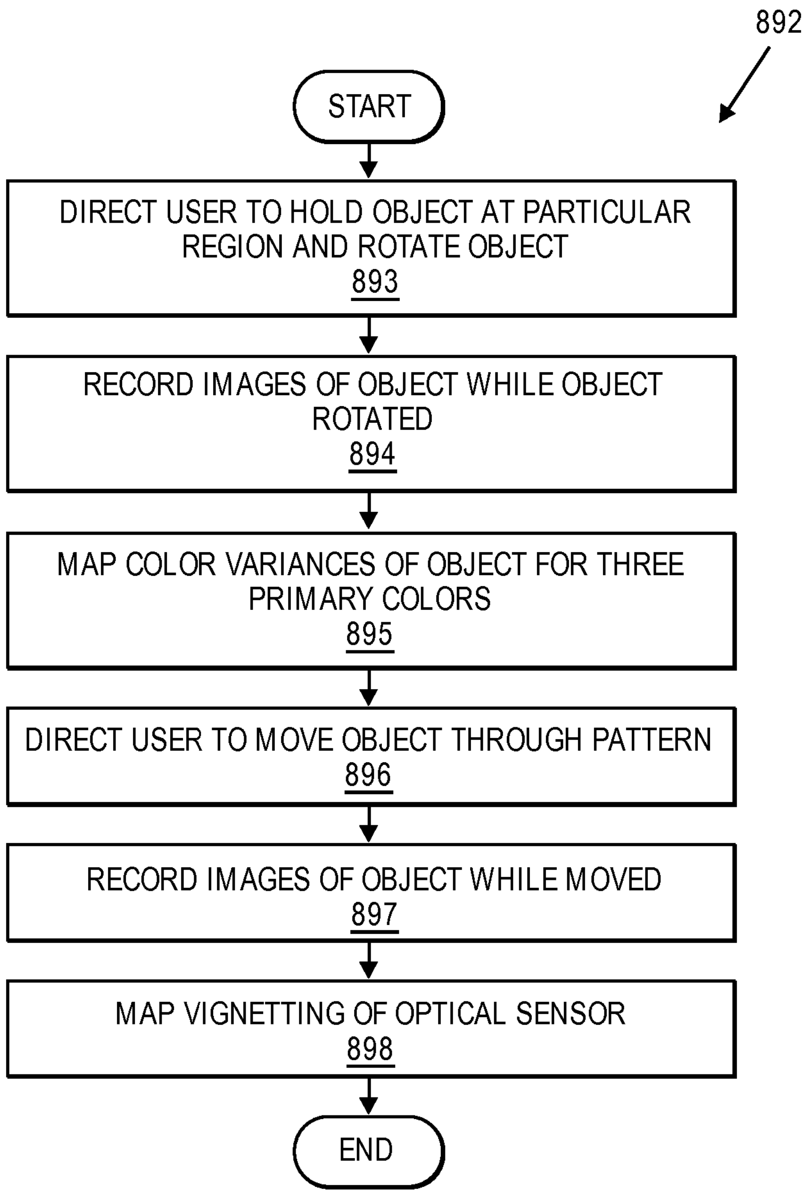
892
START
DIRECT USER TO HOLD OBJECT AT PARTICULAR REGION AND ROTATE OBJECT
893
RECORD IMAGES OF OBJECT WHILE OBJECT ROTATED
894
MAP COLOR VARIANCES OF OBJECT FOR THREE PRIMARY COLORS
895
DIRECT USER TO MOVE OBJECT THROUGH PATTERN
896
RECORD IMAGES OF OBJECT WHILE MOVED
897
MAP VIGNETTING OF OPTICAL SENSOR
898
END

FIG. 8C

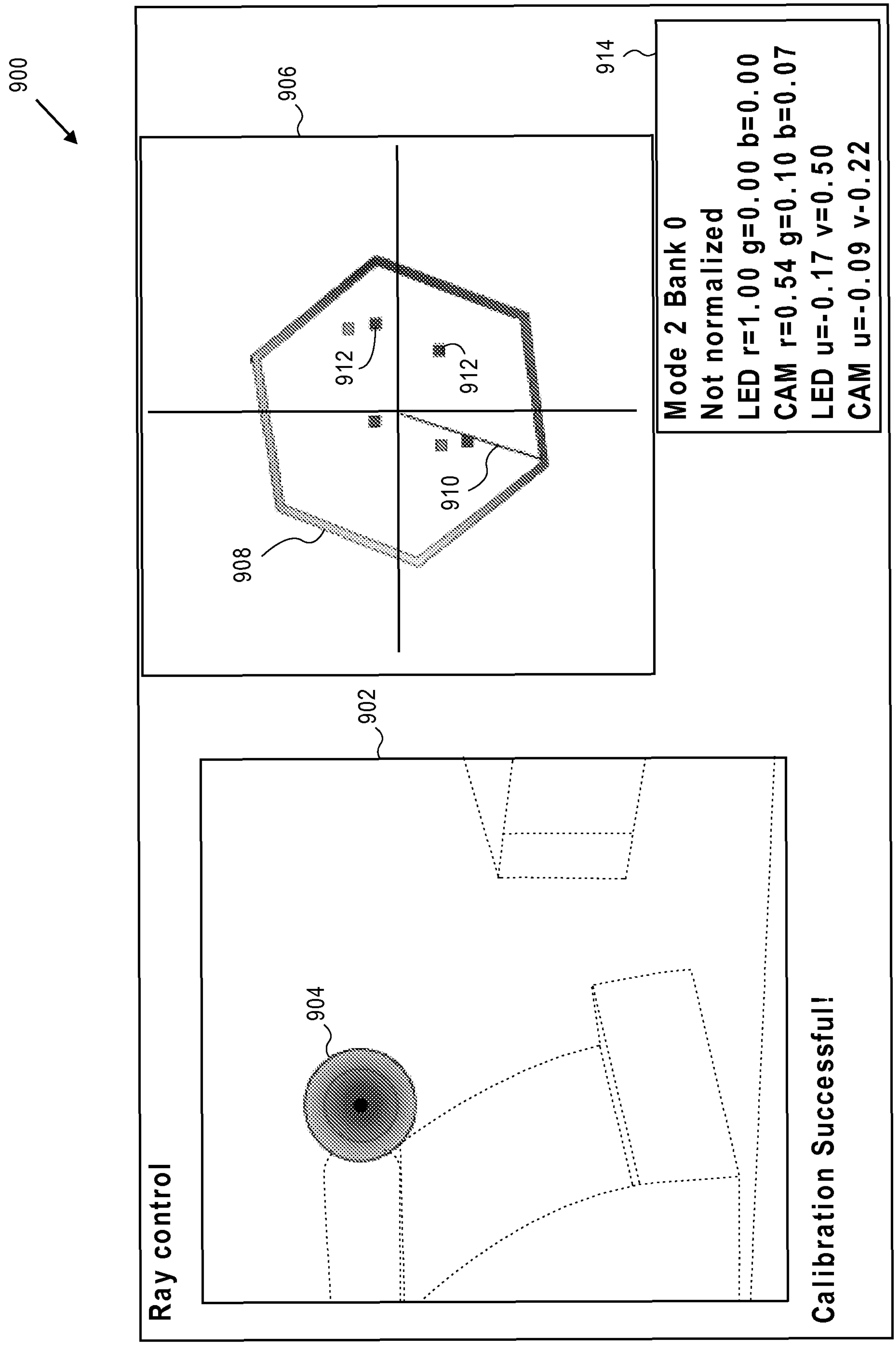
900
Ray control
902
904
Calibration Successful!
906
908
910
912
912
914
Mode 2 Bank 0
Not normalized
LED r=1.00 g=0.00 b=0.00
CAM r=0.54 g=0.10 b=0.07
LED u=-0.17 v=0.50
CAM u=-0.09 v-0.22

FIG. 9A

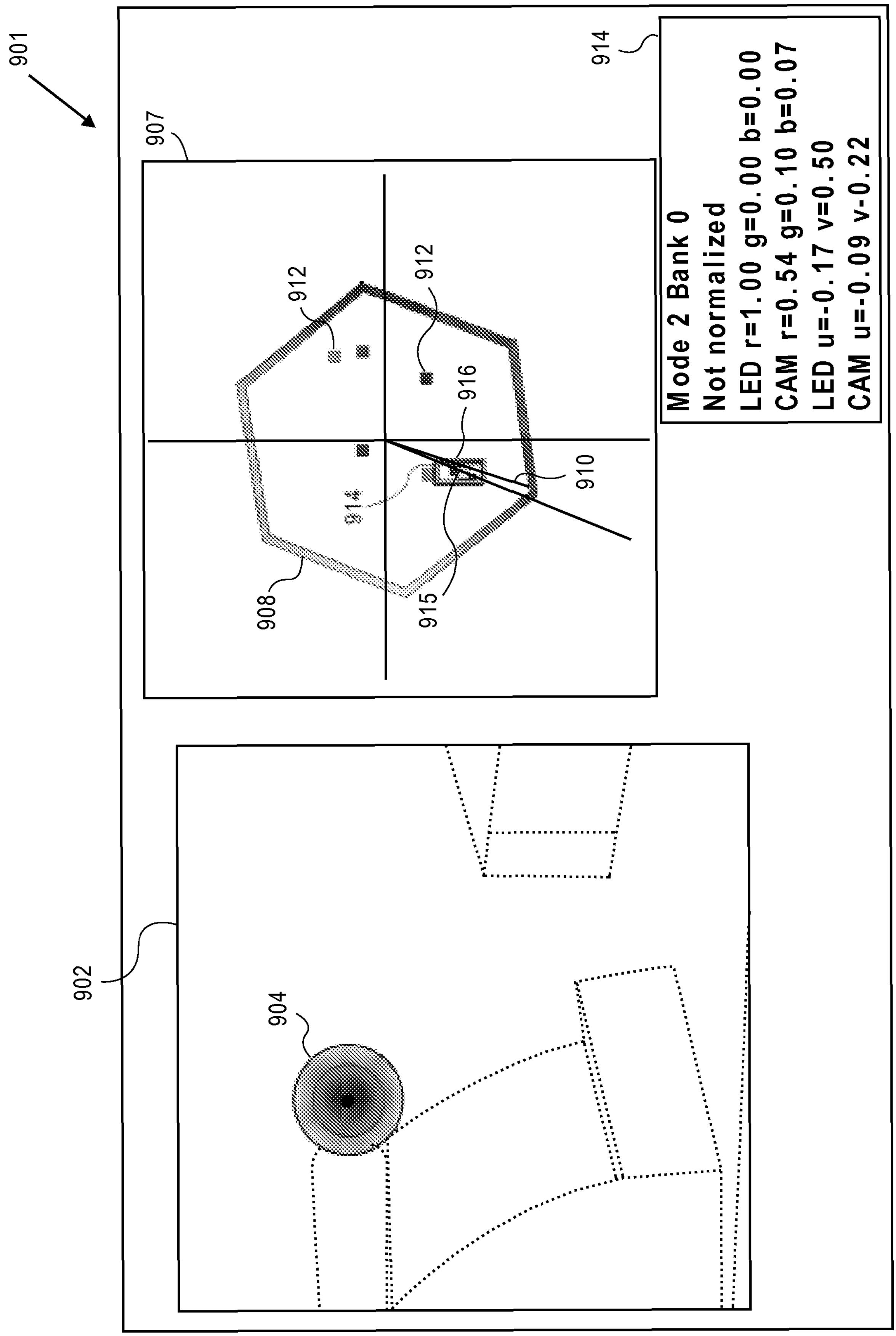
901
902
904
907
908
910
912
912
914
914
915
916
Mode 2 Bank 0
Not normalized
LED r=1.00 g=0.00 b=0.00
CAM r=0.54 g=0.10 b=0.07
LED u=-0.17 v=0.50
CAM u=-0.09 v-0.22

FIG. 9B

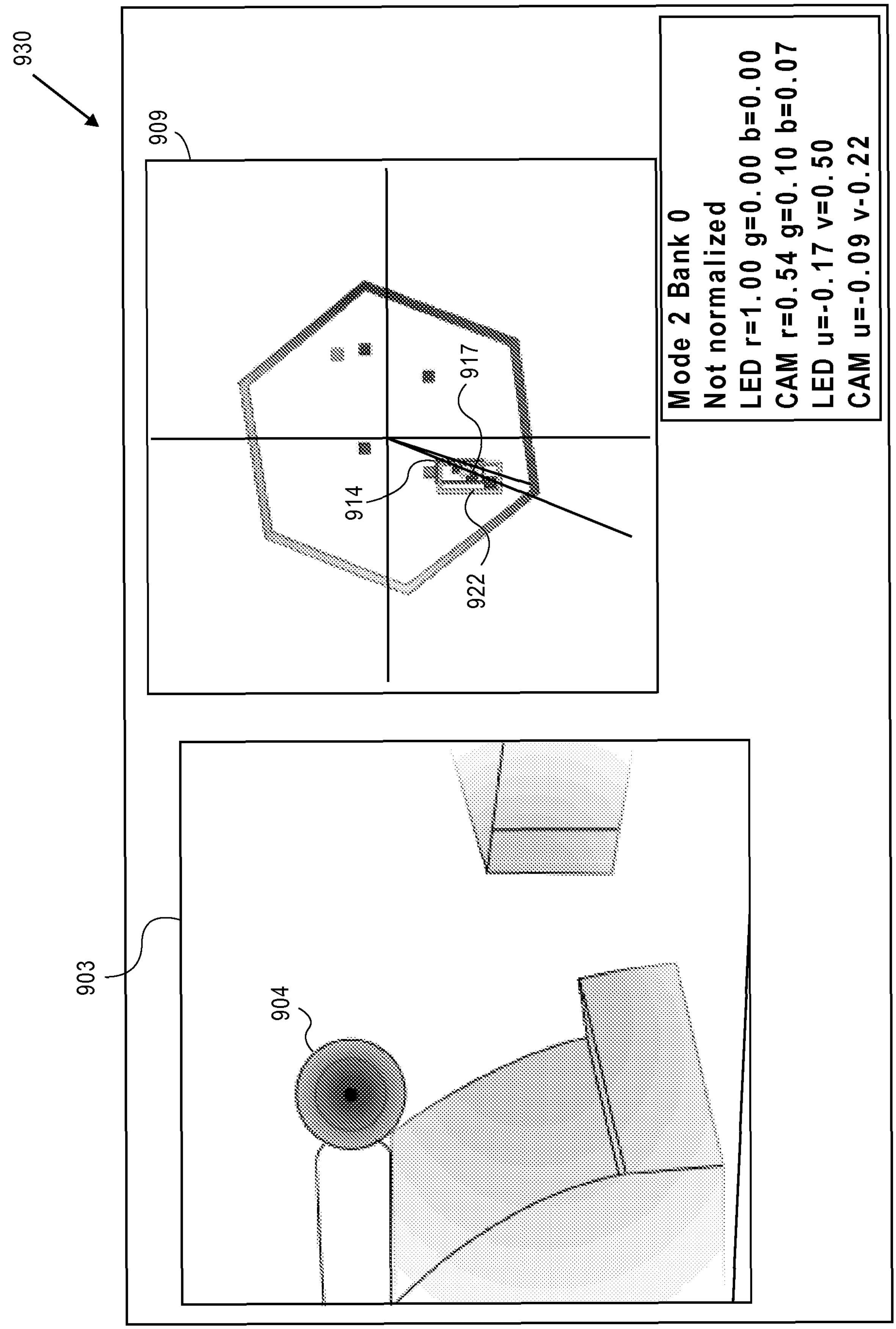
930
909
903
904
917
914
922
Mode 2 Bank 0
Not normalized
LED r=1.00 g=0.00 b=0.00
CAM r=0.54 g=0.10 b=0.07
LED u=-0.17 v=0.50
CAM u=-0.09 v-0.22

FIG. 9C

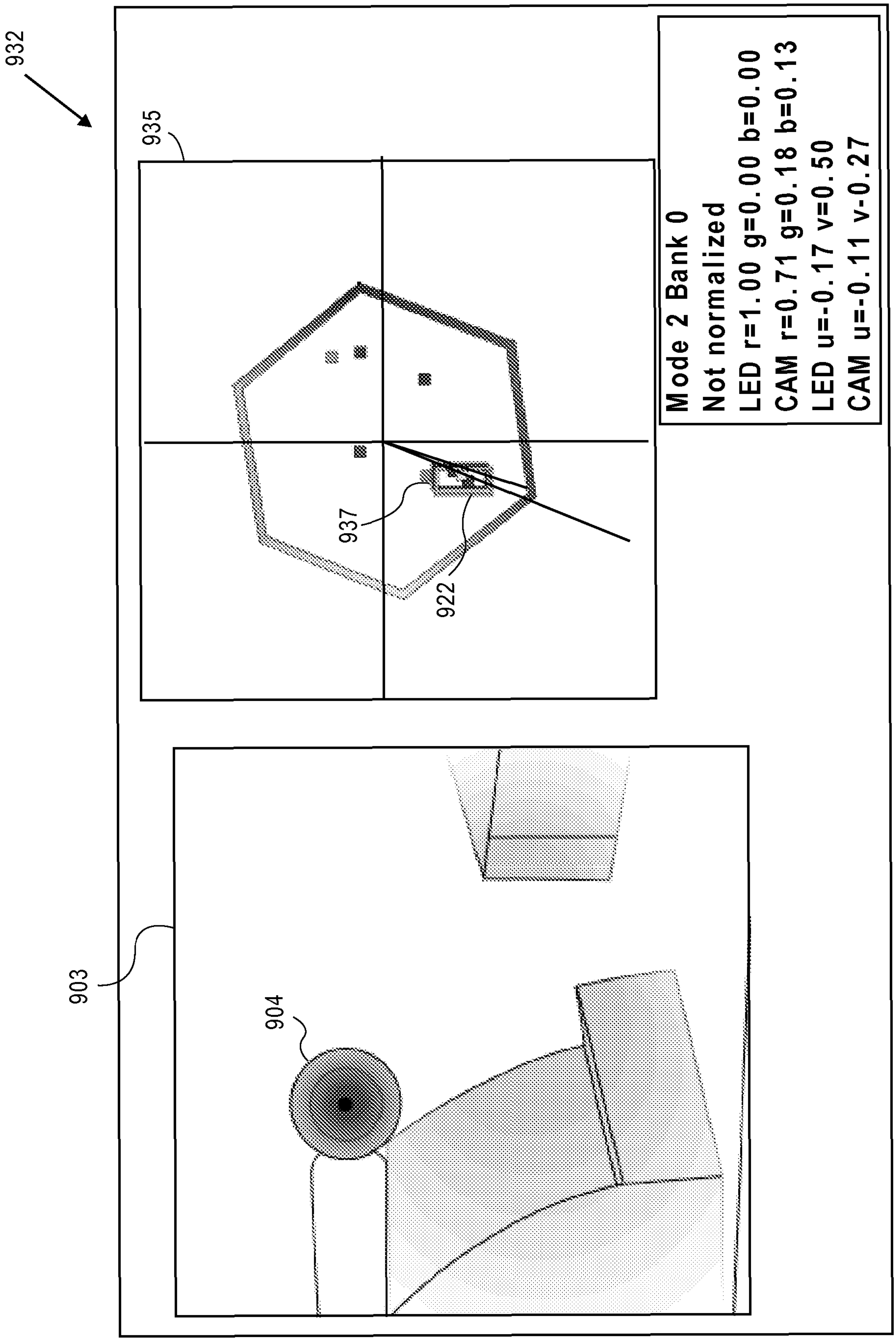
932
935
Mode 2 Bank 0
Not normalized
LED r=1.00 g=0.00 b=0.00
CAM r=0.71 g=0.18 b=0.13
LED u=-0.17 v=0.50
CAM u=-0.11 v-0.27
937
922
903
904

FIG. 9D

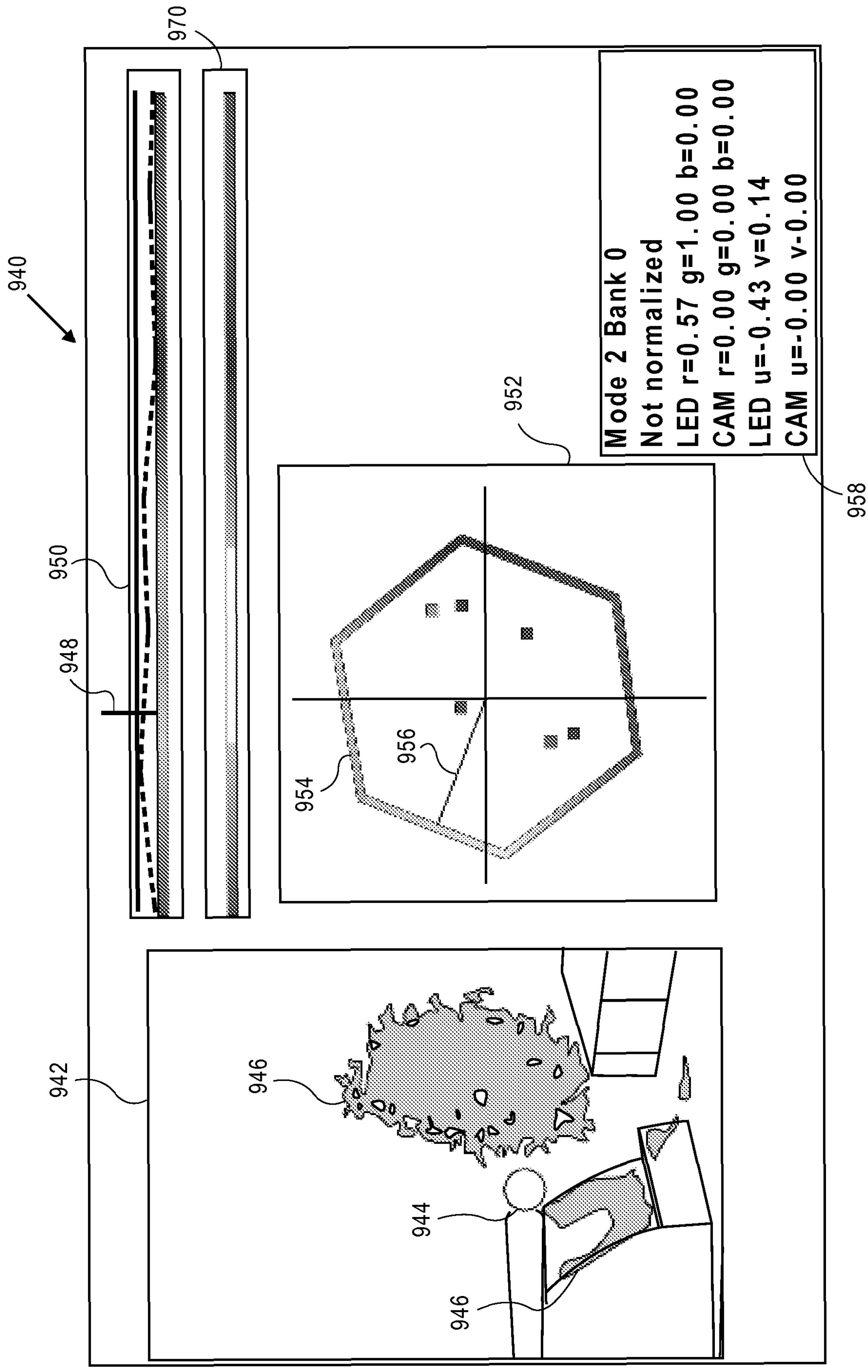
940
970
950
948
952
942
946
954
956
944
946
958
Mode 2 Bank 0
Not normalized
LED r=0.57 g=1.00 b=0.00
CAM r=0.00 g=0.00 b=0.00
LED u=-0.43 v=0.14
CAM u=-0.00 v-0.00

FIG. 9E

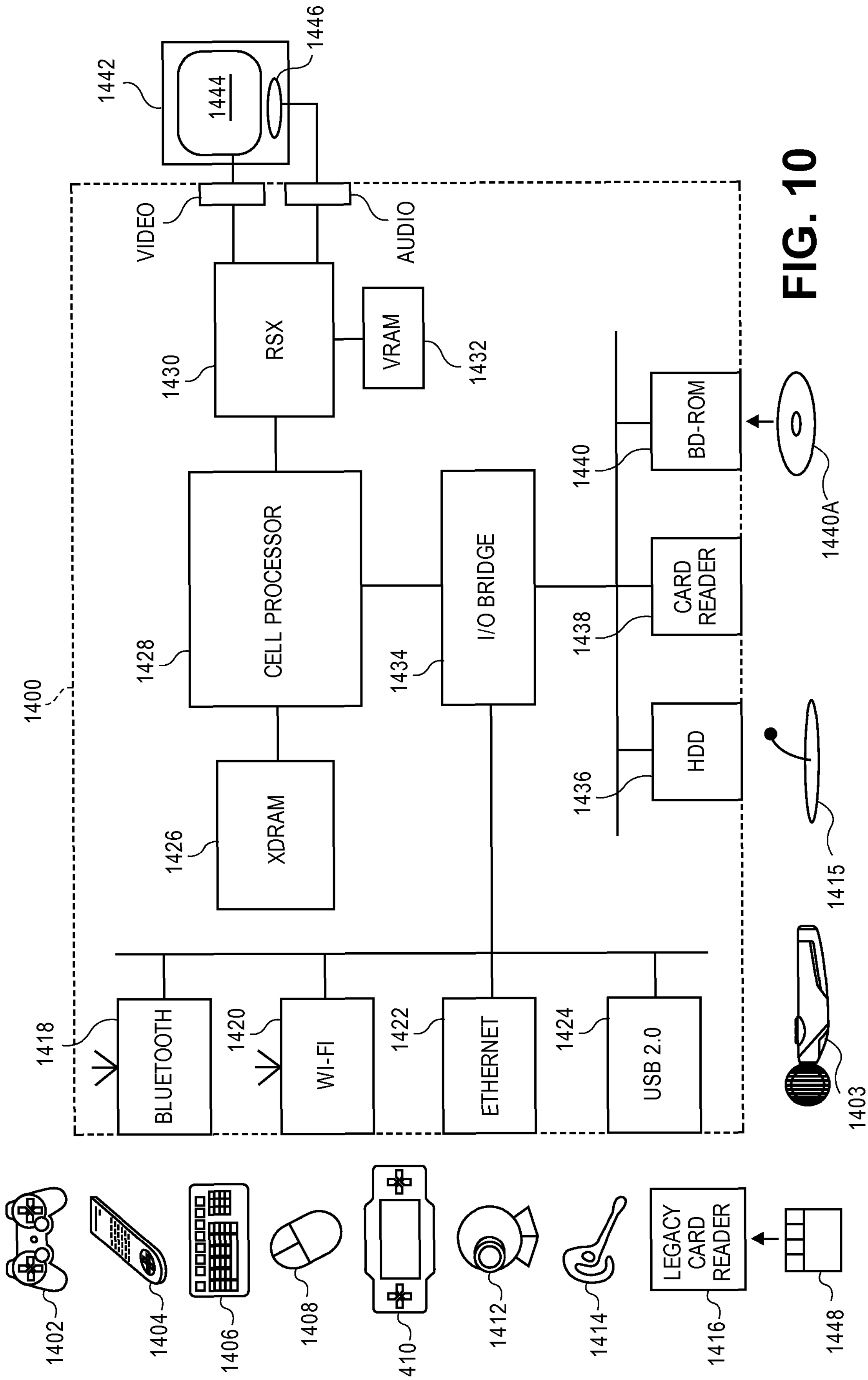
1400
1442
1444
1446
VIDEO
AUDIO
RSX
1430
VRAM
1432
CELL PROCESSOR
1428
XDRAM
1426
I/O BRIDGE
1434
BD-ROM
1440
1440A
CARD READER
1438
HDD
1436
1415
BLUETOOTH
1418
WI-FI
1420
ETHERNET
1422
USB 2.0
1424
1403
1402
1404
1406
1408
410
1412
1414
LEGACY CARD READER
1416
1448

FIG. 10

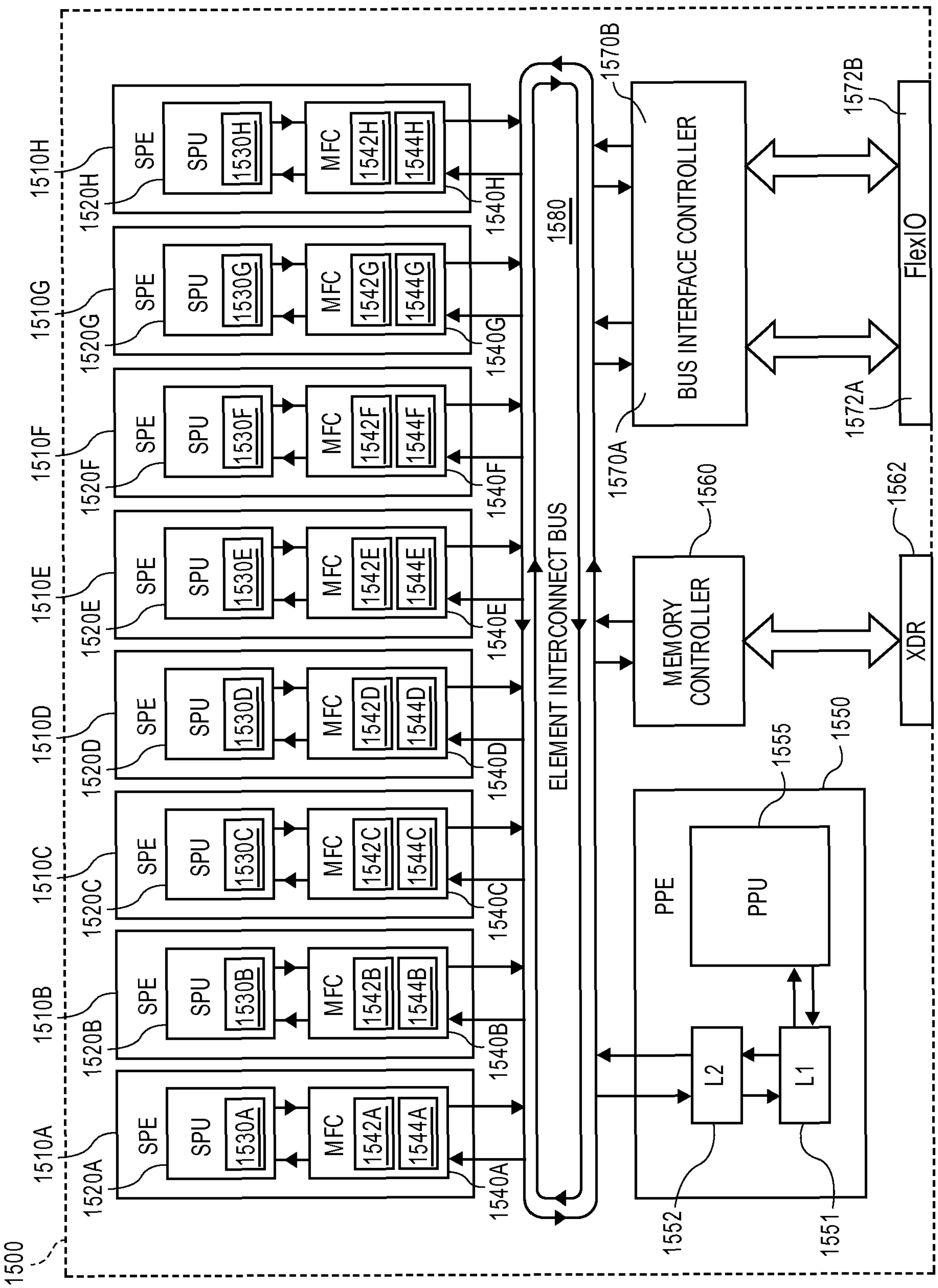
1500
1510A
1510B
1510C
1510D
1510E
1510F
1510G
1510H
1520A
1520B
1520C
1520D
1520E
1520F
1520G
1520H
SPE
SPU
1530A
1530B
1530C
1530D
1530E
1530F
1530G
1530H
MFC
1542A
1544A
1542B
1544B
1542C
1544C
1542D
1544D
1542E
1544E
1542F
1544F
1542G
1544G
1542H
1544H
1540A
1540B
1540C
1540D
1540E
1540F
1540G
1540H
ELEMENT INTERCONNECT BUS
1580
1570A
1570B
BUS INTERFACE CONTROLLER
1572A
1572B
FlexIO
1560
MEMORY CONTROLLER
1562
XDR
1550
1555
PPE
PPU
L2
L1
1552
1551

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060160616 A
- US 20050129273 A
- US 20070117625 A
- US 20070127775 A